# EUROPEAN PATENT APPLICATION

(11) **EP 4 852 300 A1**
(43) Date of publication of application: **09.12.2026**
(21) Application number: 25846300.9
(22) Date of filing: 07.02.2025
(51) Int. Cl.: H02M 7/483, H02M 7/5387

(54) **POWER CONVERTER**

(30) Priority: 31.07.2024 CN 202411048114
(71) Applicant: Huawei Digital Power Technologies Co., Ltd., Shenzhen, Guangdong 518043 (CN)
(72) Inventor: LI, Jianshan, Shenzhen, Guangdong 518043 (CN)
(74) Representative: Huawei European IPR
(86) International application number: PCT/CN2025/076299
(87) International publication number: WO 2026/025850

(57) **Abstract**

This application provides a power converter. An MPPT circuit connected between inputs of the power converter and a primary-side circuit is added, and in combination with control over on and off states of switching transistors in the MPPT circuit and the primary-side circuit, when the power converter is connected to two photovoltaic modules connected in series, MPPT tracking can be implemented on a single photovoltaic module as required. In addition, when output currents of the two photovoltaic modules connected in series are consistent, at least a part of switching transistors in the MPPT circuit may be directly turned off, and MPPT tracking is implemented on the entire connected photovoltaic modules by controlling the on and off states of the switching transistors in the primary-side circuit, to improve working efficiency. Moreover, in combination with the control over the on and off states of the switching transistors in the MPPT circuit and the primary-side circuit, normal working can be further implemented when the single photovoltaic module is connected, to resolve a compatibility problem.

## Description

### CROSS-REFERENCE TO RELATED APPLICATIONS

This application claims priority to Chinese Patent Application No. 202411048114.3, filed with the China National Intellectual Property Administration on July 31, 2024 and entitled "POWER CONVERTER", which is incorporated herein by reference in its entirety.

### TECHNICAL FIELD

The present invention relates to the field of power electronics technologies, and in particular, to a power converter.

### BACKGROUND

Currently, with the shortage of global non-renewable energy and the worsening of environmental pollution, the application of photovoltaic power generation is becoming increasingly widespread. In photovoltaic power generation, a direct current generated by a photovoltaic module is converted into an alternating current by using an inverter, and then the alternating current is connected to an alternating current power grid or is provided for a load.

In the current residential photovoltaic market, there are a plurality of micro-inverter solutions. In many micro-inverter solutions, photovoltaic modules are mainly connected in parallel. A parallel-type micro-inverter usually performs power conversion separately for a plurality of photovoltaic modules. It is difficult to apply a circuit topology of a single-stage resonant inverter (cycloconverter) (especially with variable frequency) to a scenario with inputs of the plurality of photovoltaic modules.

The single-stage resonant inverter is an isolated direct current-to-alternating current (DC-AC) circuit based on a resonant converter, the circuit topology of the single-stage resonant inverter includes a small quantity of components, and the single-stage resonant inverter can achieve extremely high conversion efficiency and is applicable to the field of the micro-inverter with a single photovoltaic module. In the pursuit of optimal working efficiency, the single-stage resonant inverter works in a variable-frequency mode, and its working frequency is related to a voltage on an alternating current (AC) side, and changes non-linearly. The variable-frequency mode is not applicable to the scenario with the inputs of the plurality of photovoltaic modules. Generally, during inputs of a plurality of ports, working frequency needs to be constant and non-resonant to facilitate control. When a voltage or a current of the photovoltaic module is not constant due to irradiance and shading conditions, it is difficult to optimize each photovoltaic module through an input of a single port by simply connecting several photovoltaic modules in series or in parallel. In other words, for directly connected photovoltaic modules in series/in parallel, it cannot be ensured that module-level maximum power point tracking (maximum power point tracking, MPPT) is implemented for each photovoltaic module separately.

How to simplify a circuit structure of the single-stage resonant inverter when the plurality of photovoltaic modules are connected, precisely control MPPT of each photovoltaic module, and achieve high efficiency and miniaturization of the single-stage resonant inverter has become the focus of researchers in the industry.

### SUMMARY

This application provides a power converter, to precisely control MPPT of each photovoltaic module.

According to a first aspect, this application provides a power converter, including a transformer, a primary-side circuit, a secondary-side circuit, an MPPT circuit, and a controller. Inputs of the power converter include a first positive input, a second positive input, a first negative input, and a second negative input, the first negative input is connected to the second positive input, the first positive input and the first negative input are configured to connect to a photovoltaic module, and the second positive input and the second negative input are configured to connect to another photovoltaic module or an energy storage battery. The primary-side circuit is connected between the inputs of the power converter and the transformer, the primary-side circuit includes a first bridge arm and a second bridge arm that are connected in parallel, each of the first bridge arm and the second bridge arm includes an upper bridge arm and a lower bridge arm, two ends of each of the first bridge arm and the second bridge arm are respectively connected to the first positive input and the second negative input, a connection point between the upper bridge arm and the lower bridge arm of the first bridge arm is a midpoint of the first bridge arm, and a connection point between the upper bridge arm and the lower bridge arm of the second bridge arm is a midpoint of the second bridge arm. The secondary-side circuit is connected between the transformer and an output of the power converter, the output of the power converter is configured to connect to a power grid or a load, and the power converter is configured to convert a direct current output by the photovoltaic module or the energy storage battery into an alternating current, and output the alternating current to the power grid or the load. The MPPT circuit is connected between the inputs of the power converter and the primary-side circuit, and the controller is configured to control the MPPT circuit to perform maximum power tracking on the one photovoltaic module or the another photovoltaic module.

According to the power converter provided in this application, the MPPT circuit connected between the inputs of the power converter and the primary-side circuit is added, and in combination with control over on and off states of switching transistors in the MPPT circuit and the primary-side circuit, when the power converter is connected to two photovoltaic modules connected in series, MPPT tracking can be implemented on a single photovoltaic module as required. In addition, when output currents of the two photovoltaic modules connected in series are consistent, that is, a difference between the output currents is less than a specified value, at least a part of switching transistors of the bridge arm in the MPPT circuit may be directly turned off, and MPPT tracking is implemented on the entire connected photovoltaic modules by controlling the on and off states of the switching transistors in the primary-side circuit, to improve working efficiency. In addition, by using the added MPPT circuit and in combination with the control over the on and off states of the switching transistors in the MPPT circuit and the primary-side circuit, normal working can be further implemented when the single photovoltaic module is connected, to resolve a compatibility problem.

In some embodiments of this application, the MPPT circuit specifically includes a third bridge arm and a fourth bridge arm, where the third bridge arm is connected between the first negative input and the midpoint of the first bridge arm, the fourth bridge arm is connected between the second positive input and the midpoint of the second bridge arm, and each of the third bridge arm and the fourth bridge arm includes two switching transistors having opposite freewheeling directions.

When a difference between a first current and a second current is greater than a specified value, it indicates that MPPT tracking needs to be implemented on a single photovoltaic module. In this case, the controller controls the third bridge arm and the fourth bridge arm to be in a working state, where the working state is a state in which at least one switching transistor in the bridge arm continuously switches between an on state and an off state, the first current is an output current of the photovoltaic module connected to the first positive input and the first negative input, and the second current is an output current of the another photovoltaic module connected to the second positive input and the second negative input.

When only the first current is detected, the controller is further configured to control the third bridge arm and the fourth bridge arm to be in the working state, and control a switching transistor of the lower bridge arm in the bridge arm of the primary-side circuit to be in the off state. When only the second current is detected, the controller is further configured to control the third bridge arm and the fourth bridge arm to be in the working state, and a switching transistor of the upper bridge arm in the bridge arm of the primary-side circuit to be in the off state. In this way, normal working can be implemented when the single photovoltaic module is connected, to resolve a compatibility problem

In some embodiments of this application, the midpoint of the first bridge arm is connected to one end of a primary-side winding of the transformer, and the midpoint of the second bridge arm is connected to the other end of the primary-side winding of the transformer. The two switching transistors that are included in each of the third bridge arm and the fourth bridge arm are connected in series and have the opposite freewheeling directions.

The foregoing embodiment has the following three working conditions.

In an ideal working case, that is, when a first photovoltaic module and a second photovoltaic module are not shaded, that is, when the difference between the first current and the second current is less than the specified value, the controller controls all or a part of switching transistors of the bridge arm in the MPPT circuit to be in the off state. The controller may control the primary-side circuit to perform driving control according to a complementary driving principle of a full-bridge circuit, to implement common MPPT tracking on the first photovoltaic module and the second photovoltaic module.

If the first photovoltaic module or the second photovoltaic module deviates from a maximum power output state due to an environmental condition change or another factor of the first photovoltaic module and the second photovoltaic module, the MPPT circuit needs to work, so that the first photovoltaic module or the second photovoltaic module re-work in the maximum power output state. For example, after the second photovoltaic module is shaded, an output current of the second photovoltaic module, that is, the second current, decreases. To be specific, when the second current is less than the first current and the difference between the first current and the second current is greater than the specified value, it indicates that the second photovoltaic module deviates from the maximum power output state, and the bridge arm in the MPPT circuit needs to be enabled to switch from the off state to the working state, that is, at least one switching transistor of the bridge arm continuously switches between the on state and the off state, to perform MPPT tracking. Specifically, the upper bridge arm of the first bridge arm and the upper bridge arm of the second bridge arm may be controlled to be complementarily turned on. When the upper bridge arm of the first bridge arm is controlled to be in the on state, the fourth bridge arm and the lower bridge arm of the second bridge arm may be controlled to be complementarily turned on. When the upper bridge arm of the second bridge arm is controlled to be in the on state, the third bridge arm and the lower bridge arm of the first bridge arm may be controlled to be complementarily turned on. By controlling the working state of the bridge arm in the MPPT circuit, in one control period, the first photovoltaic module that has a larger output current can be always in a current output state, and the second photovoltaic module that has a smaller output current outputs a current only in a part of time periods. Output current duration of the first photovoltaic module is longer than output current duration of the second photovoltaic module, to reduce the difference between the output currents of the first photovoltaic module and the second photovoltaic module.

Similarly, after the first photovoltaic module is shaded, an output current of the first photovoltaic module, that is, the first current, decreases. To be specific, when the first current is less than the second current and the difference between the first current and the second current is greater than the specified value, it indicates that the first photovoltaic module deviates from the maximum power output state, and the bridge arm in the MPPT circuit needs to be enabled to switch from the off state to the working state, that is, at least one switching transistor of the bridge arm continuously switches between the on state and the off state, to perform MPPT tracking. Specifically, the lower bridge arm of the first bridge arm and the lower bridge arm of the second bridge arm may be controlled to be complementarily turned on. When the lower bridge arm of the first bridge arm is controlled to be in the on state, the fourth bridge arm and the upper bridge arm of the second bridge arm may be controlled to be complementarily turned on. When the lower bridge arm of the second bridge arm is controlled to be in the on state, the third bridge arm and the upper bridge arm of the first bridge arm may be controlled to be complementarily turned on.

In addition, a proportion of a time period in which only the first photovoltaic module or the second photovoltaic module outputs a current in one control period may be adjusted based on the difference between the first current and the second current. For example, when the second photovoltaic module is heavily shaded, the difference between the first current and the second current is large. In this case, on duration of the third bridge arm and the fourth bridge arm should be increased, that is, duty cycles of switching transistors of the third bridge arm and the fourth bridge arm should be increased, to increase the output current duration of the first photovoltaic module. Therefore, it may be considered that on duration of the switching transistor of the bridge arm in the MPPT circuit is positively correlated with the difference between the first current and the second current.

If the inputs of the power converter are connected to only one photovoltaic module, that is, only the second current is detected, the upper bridge arm in the bridge arm of the primary-side circuit may be controlled to be in the off state, or when only the first current is detected, the lower bridge arm in the bridge arm of the primary-side circuit is controlled to be in the off state. In addition, the bridge arm of the MPPT circuit is controlled to be in the working state. A switching transistor in the working state in the bridge arm of the MPPT circuit may replace a switching transistor in the off state in the primary-side circuit, and form a full-bridge circuit with a switching transistor in the working state in the primary-side circuit, and driving control is performed according to a complementary driving principle, to implement MPPT tracking on one photovoltaic module.

Specifically, when only the first current is detected, the controller may control the lower bridge arm of the first bridge arm and the lower bridge arm of the second bridge arm to be in the off state, control the third bridge arm and the upper bridge arm of the first bridge arm to be complementarily turned on, and control the fourth bridge arm and the upper bridge arm of the second bridge arm to be complementarily turned on.

Specifically, when only the second current is detected, the controller may control the upper bridge arm of the first bridge arm and the upper bridge arm of the second bridge arm to be in the off state, control the third bridge arm and the lower bridge arm of the first bridge arm to be complementarily turned on, and control the fourth bridge arm and the lower bridge arm of the second bridge arm to be complementarily turned on.

In this embodiment of this application, a switching transistor that forms a current loop with the primary-side winding of the transformer and a direct current power supply may be further controlled to be turned on with a phase shift.

In some other embodiments of this application, each of the third bridge arm and the fourth bridge arm includes two sub-bridge arms connected in parallel, each of the two sub-bridge arms connected in parallel includes two switching transistors that are connected in series and have opposite freewheeling directions, and a connection point between the two switching transistors that are connected in series and have the opposite freewheeling directions is a midpoint of the corresponding sub-bridge arm. The two sub-bridge arms of the third bridge arm are connected in parallel between the first negative input and one end of a primary-side winding of the transformer, a midpoint of one sub-bridge arm of the third bridge arm is connected to the upper bridge arm of the first bridge arm, and a midpoint of the other sub-bridge arm of the third bridge arm is connected to the lower bridge arm of the first bridge arm. The two sub-bridge arms of the fourth bridge arm are connected in parallel between the second positive input and the other end of the primary-side winding of the transformer, a midpoint of one sub-bridge arm of the fourth bridge arm is connected to the upper bridge arm of the second bridge arm, and a midpoint of the other sub-bridge arm of the fourth bridge arm is connected to the lower bridge arm of the second bridge arm.

The foregoing embodiment has the following three working conditions.

In an ideal working case, that is, when the first photovoltaic module and the second photovoltaic module are not shaded, the difference between the first current and the second current is less than the specified value. Because the first photovoltaic module and the second photovoltaic module are already in the maximum power output state, in this case, one switching transistor connected to the input of the power converter in the sub-bridge arm of the MPPT circuit is in the off state, and driving control may be performed on the other switching transistor in the sub-bridge arm according to the complementary driving principle of the full-bridge circuit in combination with the switching transistors in the primary-side circuit, to implement common MPPT tracking on the first photovoltaic module and the second photovoltaic module.

Specifically, when the difference between the first current and the second current is less than the specified value, a switching transistor connected between the upper bridge arm of the first bridge arm and the primary-side winding in the third bridge arm and the lower bridge arm of the second bridge arm are controlled to be complementarily turned on, a switching transistor connected between the lower bridge arm of the first bridge arm and the primary-side winding in the third bridge arm and the upper bridge arm of the second bridge arm are controlled to be complementarily turned on, a switching transistor connected between the upper bridge arm of the second bridge arm and the primary-side winding in the fourth bridge arm and the lower bridge arm of the first bridge arm are controlled to be complementarily turned on, and a switching transistor connected between the lower bridge arm of the second bridge arm and the primary-side winding in the fourth bridge arm and the upper bridge arm of the first bridge arm are controlled to be complementarily turned on.

If the first photovoltaic module or the second photovoltaic module deviates from a maximum power output state due to an environmental condition change or another factor of the first photovoltaic module and the second photovoltaic module, the MPPT circuit needs to work, so that the first photovoltaic module or the second photovoltaic module re-work in the maximum power output state. For example, after the second photovoltaic module is shaded, the output current of the second photovoltaic module, that is, the second current, decreases. When the difference between the first current and the second current is greater than the specified value, it indicates that the second photovoltaic module deviates from the maximum power output state, a switching transistor connected to the input of the power converter in the third bridge arm of the MPPT circuit needs to be controlled to be in the off state, and a switching transistor connected to the input of the power converter in the fourth bridge arm needs to be controlled to be in the off state. In addition, a part of switching transistors in the MPPT circuit are enabled to switch from the off state to the working state to perform MPPT tracking. In this case, output voltages of the first photovoltaic module PV1 and the second photovoltaic module PV2 may be the same, or may be different. By controlling the working states of the switching transistors in the MPPT circuit, in one control period, the first photovoltaic module that has a larger output current can be always in a current output state, and the second photovoltaic module that has a smaller output current outputs a current only in a part of time periods. Output current duration of the first photovoltaic module is longer than output current duration of the second photovoltaic module, to reduce the difference between the output currents of the first photovoltaic module and the second photovoltaic module.

Similarly, after the first photovoltaic module is shaded, the output current of the first photovoltaic module, that is, the first current, decreases. To be specific, when the first current is less than the second current and the difference between the first current and the second current is greater than the specified value, it indicates that the first photovoltaic module deviates from the maximum power output state, a switching transistor connected to the input of the power converter in the third bridge arm of the MPPT circuit needs to be controlled to be in the off state, and a switching transistor connected to the input of the power converter in the fourth bridge arm needs to be controlled to be in the off state. In addition, a part of switching transistors in the MPPT circuit are enabled to switch from the off state to the working state to perform MPPT tracking.

In addition, a proportion of a time period in which only the first photovoltaic module outputs a current in one control period may be adjusted based on the difference between the first current and the second current. For example, when the second photovoltaic module is heavily shaded, the difference between the first current and the second current is large. In this case, on duration of the switching transistors of the third bridge arm and the fourth bridge arm should be increased, that is, duty cycles of the switching transistors of the third bridge arm and the fourth bridge arm should be increased, to increase the output current duration of the first photovoltaic module. Therefore, it may be considered that on duration of the switching transistor of the bridge arm in the MPPT circuit is positively correlated with the difference between the first current and the second current.

If the inputs of the power converter are connected to only one photovoltaic module, that is, only the second current is detected, the upper bridge arm in the bridge arm of the primary-side circuit may be controlled to be in the off state; or when only the first current is detected, the lower bridge arm in the bridge arm of the primary-side circuit is controlled to be in the off state. In addition, a switching transistor connected to the input of the power converter in the third bridge arm of the MPPT circuit is controlled to be in the off state, and a switching transistor connected to the input of the power converter in the fourth bridge arm is controlled to be in the off state, and other switching transistors in the bridge arms may be in the on state or the working state. A switching transistor in the working state in the bridge arm of the MPPT circuit may replace an upper bridge arm or a lower bridge arm in the off state in the primary-side circuit, and form a full-bridge circuit with a switching transistor in the working state in the primary-side circuit, and driving control is performed according to a complementary driving principle, to implement MPPT tracking on one photovoltaic module.

In this embodiment of this application, a switching transistor that forms a current loop with the primary-side winding of the transformer and a direct current power supply may be further controlled to be turned on with a phase shift.

In some other embodiments of this application, to avoid a problem of a short circuit of the photovoltaic module caused by misconnection of a terminal, a first switching transistor may be connected between the first negative input and the second positive input. A freewheeling direction of the first switching transistor is from the first negative input to the second positive input, and the first switching transistor has a function of blocking a current from the second positive input to the first negative input, so that formation of a short-circuit current between the second positive input and the first negative input can be effectively prevented, and a risk such as fire of the photovoltaic module caused by the short circuit can be effectively avoided.

In this application, the disposed first switching transistor may further have a function of improving safety when the power converter is powered off. Generally, an output voltage of a single photovoltaic module is relatively safe for a user. However, after output voltages of two photovoltaic modules are superimposed, a total output voltage of the two photovoltaic modules is high, which poses a threat to safety of the user. Specifically, in a circuit topology in which the first switching transistor is not disposed, when the power converter stops working, the user may be exposed to a high photovoltaic module output voltage, where the voltage is a sum of the output voltages of the first photovoltaic module and the second photovoltaic module. This may pose a safety threat to the user. However, in a circuit topology in which the first switching transistor is disposed, the first switching transistor may be actively turned off, so that the user can be only exposed to the output voltage of one of the first photovoltaic module and the second photovoltaic module at most, to greatly reduce the safety threat to the user caused by the excessively high voltage.

In some embodiments of this application, one end of a first switch is connected to the first negative input, and the other end of the first switch is connected to the second positive input. One end of the third bridge arm is connected to the first negative input, and one end of the fourth bridge arm is connected to the second positive input; or both one end of the third bridge arm and one end of the fourth bridge arm are connected to the first negative input; or both one end of the third bridge arm and one end of the fourth bridge arm are connected to the second positive input.

In some other embodiments of this application, a second switching transistor may be further included. The first switching transistor and the second switching transistor are connected in series between the first negative input and the second positive input. Both one end of the third bridge arm and one end of the fourth bridge arm are connected to a connection point between the first switching transistor and the second switching transistor.

In some other embodiments of this application, the primary-side circuit may further include a first capacitor used as a direct-current blocking capacitor. The first circuit is connected between the midpoint of the first bridge arm or the midpoint of the second bridge arm and the transformer. The first capacitor may reduce signal interference between the primary-side circuit and the transformer.

In some other embodiments of this application, the power converter may further include an inductive device, and the secondary-side circuit is connected to the inductive device in series and then connected to the transformer.

In some other embodiments of this application, the secondary-side circuit includes a fifth bridge arm, the fifth bridge arm includes an upper half-bridge arm and a lower half-bridge arm, the upper half-bridge arm includes two switching transistors having opposite freewheeling directions, the lower half-bridge arm includes two switching transistors having opposite freewheeling directions, and a connection point between the upper half-bridge arm and the lower half-bridge arm is connected to the inductive device in series and then connected to one end of a secondary-side winding of the transformer, or a connection point between the upper half-bridge arm and the lower half-bridge arm is connected to one end of a secondary-side winding of the transformer. The secondary-side circuit may further include a second capacitor and a third capacitor. The second capacitor and the third capacitor are connected in series and then connected in parallel to the fifth bridge arm. A connection point between the second capacitor and the third capacitor is connected to the other end of the secondary winding of the transformer.

In some other embodiments of this application, the secondary-side circuit may include a fifth bridge arm, the fifth bridge arm includes an upper half-bridge arm and a lower half-bridge arm, the upper half-bridge arm includes two switching transistors having opposite freewheeling directions, the lower half-bridge arm includes two switching transistors having opposite freewheeling directions, and a connection point between the upper half-bridge arm and the lower half-bridge arm is connected to the inductive device in series and then connected to one end of a secondary-side winding of the transformer, or a connection point between the upper half-bridge arm and the lower half-bridge arm is connected to one end of a secondary-side winding of the transformer. The secondary-side circuit may further include a fifth capacitor, and the fifth capacitor is connected between the upper half-bridge arm or the lower half-bridge arm and the other end of the secondary-side winding of the transformer.

In some other embodiments of this application, the secondary-side circuit includes a fifth bridge arm and a sixth bridge arm that are connected in parallel, each of the fifth bridge arm and the sixth bridge arm includes an upper half-bridge arm and a lower half-bridge arm, the upper half-bridge arm includes two switching transistors having opposite freewheeling directions, and the lower half-bridge arm includes two switching transistors having opposite freewheeling directions. A connection point between the upper half-bridge arm and the lower half-bridge arm of the fifth bridge arm is connected to the inductive device in series and then connected to one end of a secondary-side winding of the transformer, or a connection point between the upper half-bridge arm and the lower half-bridge arm of the fifth bridge arm is connected to one end of a secondary-side winding of the transformer; and a connection point between the upper half-bridge arm and the lower half-bridge arm of the sixth bridge arm is connected to the other end of the secondary-side winding of the transformer.

In some other embodiments of this application, the secondary-side circuit includes a fifth bridge arm, a sixth bridge arm, and a seventh bridge arm that are connected in parallel. One end of each of the fifth bridge arm, the sixth bridge arm, and the seventh bridge arm is connected to the inductive device in series and then connected to one end of a secondary-side winding of the transformer, or one end of each of the fifth bridge arm, the sixth bridge arm, and the seventh bridge arm is connected to one end of a secondary-side winding of the transformer; and the other end of each of the fifth bridge arm, the sixth bridge arm, and the seventh bridge arm is connected to the other end of the secondary-side winding of the transformer. Each of the fifth bridge arm, the sixth bridge arm, and the seventh bridge arm includes an upper half-bridge arm and a lower half-bridge arm, the upper half-bridge arm includes two switching transistors having opposite freewheeling directions, and the lower half-bridge arm includes a second capacitor. In the fifth bridge arm, the sixth bridge arm, and the seventh bridge arm, connection points between the upper half-bridge arms and the lower half-bridge arms is separately connected to the output of the power converter.

### BRIEF DESCRIPTION OF DRAWINGS

FIG. 1 is a diagram of a structure of a photovoltaic system;
FIG. 2 is a diagram of a structure of a power converter according to an embodiment of this application;
FIG. 3a is a driving time sequence diagram of the power converter provided in FIG. 2 in a working condition;
FIG. 3b is a driving time sequence diagram of the power converter provided in FIG. 2 in another working condition;
FIG. 3c is a driving time sequence diagram of the power converter provided in FIG. 2 in another working condition;
FIG. 4 is a diagram of another structure of a power converter according to an embodiment of this application;
FIG. 5a is a driving time sequence diagram of the power converter provided in FIG. 4 in a working condition;
FIG. 5b is a driving time sequence diagram of the power converter provided in FIG. 4 in another working condition;
FIG. 5c is a driving time sequence diagram of the power converter provided in FIG. 4 in another working condition;
FIG. 6a is a diagram of another structure of a power converter according to an embodiment of this application;
FIG. 6b is a diagram of a structure of a power converter in a case of misconnection according to an embodiment of this application;
FIG. 7 is a diagram of another structure of a power converter according to an embodiment of this application;
FIG. 8 is a diagram of another structure of a power converter according to an embodiment of this application;
FIG. 9 is a diagram of another structure of a power converter according to an embodiment of this application;
FIG. 10 is a diagram of another structure of a power converter according to an embodiment of this application;
FIG. 11 is a diagram of another structure of a power converter according to an embodiment of this application;
FIG. 12 is a diagram of another structure of a power converter according to an embodiment of this application;
FIG. 13 is a diagram of another structure of a power converter according to an embodiment of this application; and
FIG. 14 is a diagram of another structure of a power converter according to an embodiment of this application.

### DESCRIPTION OF EMBODIMENTS

To make the objectives, technical solutions, and advantages of this application clearer, the following further describes this application in detail with reference to the accompanying drawings. However, example implementations can be implemented in a plurality of forms, which should not be construed as being limited to the implementations described herein. In contrast, these implementations are provided to make this application more comprehensive and complete, and concepts of the example implementations are comprehensively communicated to a person skilled in the art. Same reference numerals in the figures represent same or similar structures. Therefore, repeated descriptions thereof are omitted. Words for expressing positions and directions in this application are described by using the accompanying drawings as examples. However, changes may be made as required, and all changes shall fall within the protection scope of this application. The accompanying drawings in this application are merely used to show a relative positional relationship, and do not represent a true scale.

It should be noted that specific details are set forth in the following descriptions for ease of fully understanding this application. However, this application can be implemented in a plurality of manners different from those described herein, and a person skilled in the art can perform similar promotion without departing from the connotation of this application. Therefore, this application is not limited to the following disclosed specific implementations. The following descriptions of this specification are example manners of implementing this application. However, the descriptions are intended to describe the general principle of this application, and are not intended to limit the scope of this application. The protection scope of this application shall be defined by the appended claims.

To facilitate understanding of embodiments of this application, the following first describes related technologies in embodiments of this application.

Terms used in the following embodiments are merely intended to describe particular embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with the embodiment. Therefore, in this specification, statements, such as "in an embodiment", "in some embodiments", and "in other embodiments", that appear at different places do not necessarily mean referring to a same embodiment. Instead, the statements mean referring to "one or more but not all of embodiments", unless otherwise specifically emphasized in another manner. The terms "include", "have", and variants of the terms all mean "include but are not limited to", unless otherwise specifically emphasized in another manner.

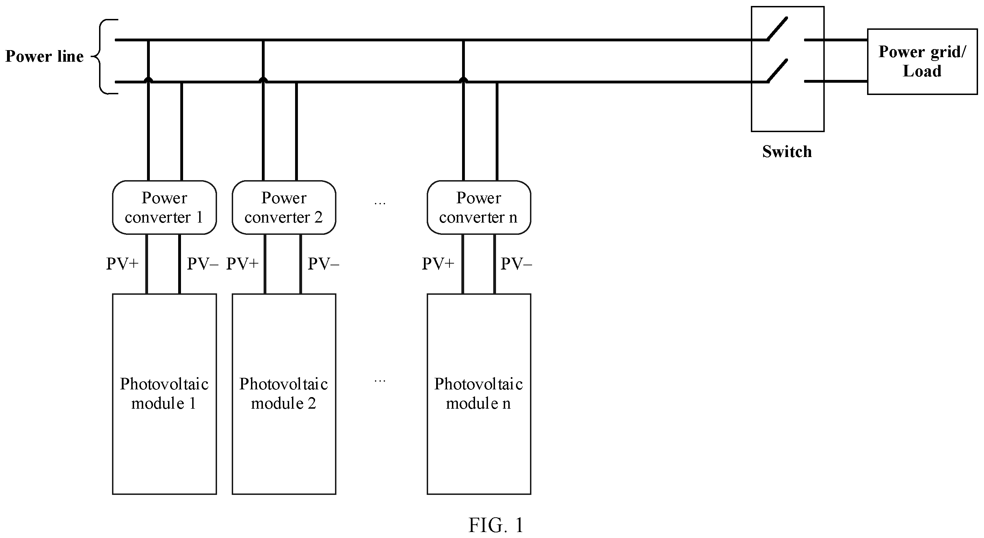

Refer to FIG. 1. A photovoltaic system usually includes a photovoltaic module and a power converter. In the embodiment shown in FIG. 1, an example in which the power converter is a micro-inverter is used for description. An input of the micro-inverter is connected to a photovoltaic module that is used as a direct current power supply, an output of the micro-inverter is connected to a power grid/load by using a power line, and the micro-inverter is used as the power converter to convert energy provided by the photovoltaic module into an alternating current and output the alternating current to the power grid or the load.

Currently, a single-stage resonant dual active bridge (dual active bridge, DAB) topology circuit has better conversion efficiency, a simpler circuit topology structure, and fewer required circuit components. Therefore, the single-stage resonant DAB topology circuit has the broader application prospect than other topology circuits. When the DAB circuit topology is used for the power converter, if two photovoltaic modules are directly connected in series and then connected to the power converter, module-level MPPT optimization cannot be implemented, that is, IV scanning of a single photovoltaic module cannot be implemented, and a working condition in which the single photovoltaic module is connected is incompatible.

To resolve the foregoing problem, in embodiments of this application, the circuit topology of the power converter is improved, and an MPPT circuit is added. By leveraging the simple circuit topology and high efficiency of the single-stage resonant power converter, module-level MPPT optimization can be implemented, that is, IV scanning of the single photovoltaic module can be implemented, and power conversion can be further performed in the working condition in which the single photovoltaic module is connected, to resolve a compatibility problem.

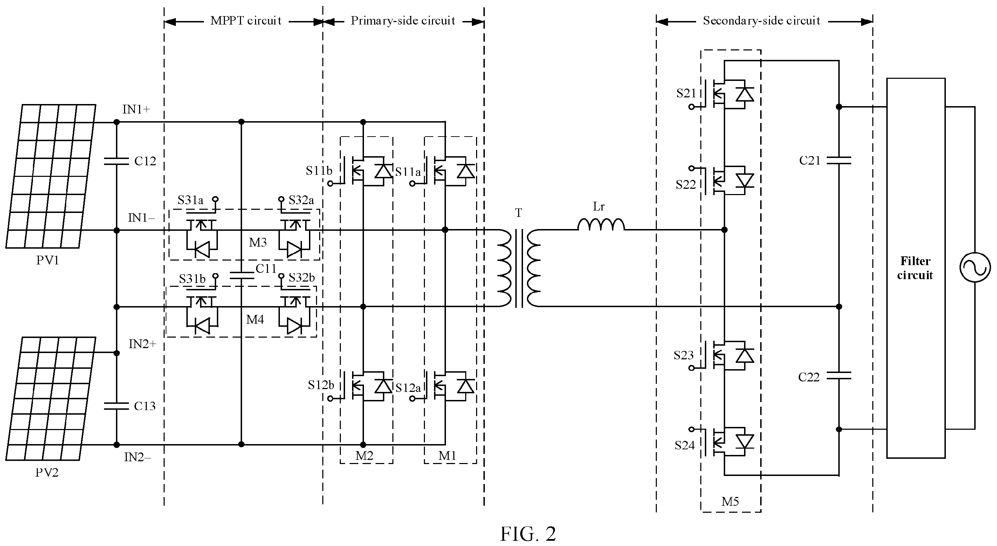

Refer to FIG. 2. The power converter provided in embodiments of this application includes a transformer T, a primary-side circuit, a secondary-side circuit, and an MPPT circuit. The primary-side circuit is connected between inputs of the power converter and the transformer, the inputs of the power converter are configured to connect to a direct current power supply, and the primary-side circuit is connected to the inputs of the power converter, that is, one end of the primary-side circuit is connected to the direct current power supply and is configured to input a direct current voltage. The direct current power supply may be at least one energy storage battery or at least one photovoltaic module. When the direct current power supply is a photovoltaic module, the power converter is an inverter, and the other end of the primary-side circuit is connected to a primary-side winding of the transformer T. The primary-side circuit is configured to convert the input direct current voltage into a high-frequency alternating current rectangular wave signal. The transformer T is specifically a high-frequency transformer, the high-frequency transformer has a turns ratio of 1:n, and the transformer T is mainly configured to implement voltage conversion and electrical isolation. The transformer T may be designed as a transformer whose inductance of a secondary-side leakage inductor is equal to Lr, so that an inductive device Lr connected in series to a secondary-side winding of the transformer T may be the secondary-side leakage inductor of the transformer T. Alternatively, the power converter may further include an inductive device Lr, that is, the transformer T may also be designed as a high-frequency transformer with very small leakage inductance, and the inductive device Lr connected in series is separately disposed. The inductive device Lr may be used as a resonant inductor to form a resonant element with a resonant capacitor, and the resonant element is configured to assist the transformer T in implementing soft switch control. The secondary-side circuit is connected between the transformer T and an output of the power converter. The output of the power converter may output an alternating current or a direct current. The output of the power converter is configured to connect to a power grid or a load. The power grid may be an alternating current power grid. The following descriptions are provided by using an example in which the output of the power converter is connected to the alternating current power grid. The secondary-side circuit is connected to the output of the power converter, that is, one end of the secondary-side circuit is configured to output an alternating current voltage, and the other end of the secondary-side circuit is connected to the secondary-side winding of the transformer. When the inductive device Lr exists, the other end of the secondary-side circuit is connected to the inductive device *L*ₛ in series and then connected to the secondary-side winding of the transformer. The secondary-side circuit is configured to convert a high-frequency alternating current rectangular wave signal into an alternating current voltage for output, and an output end of the secondary-side circuit may be connected to the power grid or the load. The primary-side circuit, the transformer T, and the secondary-side circuit of the power converter can work together to convert a direct current from the direct current power supply into an alternating current.

Specifically, in this application, the inputs of the power converter include a first positive input IN1+, a second positive input IN2+, a first negative input IN1-, and a second negative input IN2-. The first negative input IN1- is connected to the second positive input IN2+, the first positive input IN1+ and the second positive input IN2+ are configured to connect to a positive electrode of the direct current power supply, the first negative input IN1- and the second negative input IN2- are configured to connect to a negative electrode of the direct current power supply, and the output of the power converter is configured to connect to the power grid or the load. In a first application scenario, the power converter may be connected to two photovoltaic modules connected in series. Specifically, the first positive input IN1+ and the first negative input IN1-may be connected to one of the two photovoltaic modules connected in series, that is, a first photovoltaic module PV1, and the second positive input IN2+ and the second negative input IN2-may be connected to the other of the two photovoltaic modules connected in series, that is, a second photovoltaic module PV2. In a second application scenario, the power converter may be connected to only one photovoltaic module. For example, the first positive input IN1+ and the first negative input IN1- may be connected to one photovoltaic module, that is, a first photovoltaic module PV1, and the second positive input IN2+ and the second negative input IN2- are in an idle state without installation of a photovoltaic module; or the first positive input IN1+ and the first negative input IN1- are in an idle state without installation of a photovoltaic module, and the second positive input IN2+ and the second negative input IN2- are connected to one photovoltaic module, that is, a second photovoltaic module PV2; or the first positive input IN1+ and the second negative input IN2- may be connected to one photovoltaic module, that is, a first photovoltaic module PV1, and the second positive input IN2+ and the first negative input IN1- are in an idle state without installation of a photovoltaic module. In some other application scenarios, a part of the first photovoltaic module PV1 and the second photovoltaic module PV2 in the first application scenario are replaced with an energy storage battery. For example, the second positive input IN2+ and the second negative input IN2- are connected to the energy storage battery. For ease of subsequent description, the following uses an example in which the power converter is connected to the photovoltaic module for description.

In this application, the primary-side circuit is connected between the inputs of the power converter and the transformer T. The primary-side circuit may be a full-bridge circuit, that is, the primary-side circuit includes a first bridge arm M1 and a second bridge arm M2 that are connected in parallel, one end of each of the first bridge arm M1 and the second bridge arm M2 is connected to the first positive input IN1+, and the other end of each of the first bridge arm M1 and the second bridge arm M2 is connected to the second negative input IN2-. Each of the first bridge arm M1 and the second bridge arm M2 may include an upper bridge arm and a lower bridge arm. A connection point between the upper bridge arm and the lower bridge arm of the first bridge arm M1 is a midpoint of the first bridge arm M1. The midpoint of the first bridge arm M1 may be directly or indirectly connected to one end of the primary-side winding of the transformer T. A connection point between the upper bridge arm and the lower bridge arm of the second bridge arm M2 is a midpoint of the second bridge arm M2. The midpoint of the second bridge arm M2 may be directly or indirectly connected to the other end of the primary-side winding of the transformer T. Specifically, each of the upper bridge arm and the lower bridge arm may include at least one switching transistor. For example, the first bridge arm M1 may include a first switching transistor S11a and a second switching transistor S12a, a connection point between the first switching transistor S11a and the second switching transistor S12a may be used as the midpoint of the first bridge arm M1, the second bridge arm M2 may include a first switching transistor S11b and a second switching transistor S12b, and a connection point between the first switching transistor S11b and the second switching transistor S12b may be used as the midpoint of the second bridge arm M2.

In embodiments of this application, the MPPT circuit is connected between the inputs of the power converter and the primary-side circuit, and the MPPT circuit is configured to perform maximum power tracking on the first photovoltaic module or the second photovoltaic module.

Specifically, the MPPT circuit may include a third bridge arm M3 and a fourth bridge arm M4, the third bridge arm M3 is connected between the first negative input IN1- and the midpoint of the first bridge arm M1, and the fourth bridge arm M4 is connected between the second positive input IN2+ and the midpoint of the second bridge arm M2. Each of the third bridge arm M3 and the fourth bridge arm M4 includes at least two switching transistors having opposite freewheeling directions.

According to the power converter provided in this application, the MPPT circuit connected between the inputs of the power converter and the primary-side circuit is added, and in combination with control over on and off states of switching transistors in the MPPT circuit and the primary-side circuit, when the power converter is connected to two photovoltaic modules, MPPT tracking can be implemented on a single photovoltaic module as required. In addition, when output currents of the two photovoltaic modules are consistent, that is, a difference between the output currents is less than a specified value, all or a part of switching transistors of the bridge arm in the MPPT circuit may be directly turned off, and MPPT tracking is implemented on the entire connected photovoltaic modules by controlling the on and off states of the switching transistors in the primary-side circuit, to improve working efficiency. In addition, by using the added MPPT circuit and in combination with the control over the on and off states of the switching transistors in the MPPT circuit and the primary-side circuit, normal working can be further implemented when the single photovoltaic module is connected, to resolve a compatibility problem.

In this application, the switching transistors in the primary-side circuit and the MPPT circuit are all controlled by a controller, and the controller is configured to send a control signal such as a pulse width modulation (pulse width modulation, PWM) signal to each switching transistor in the primary-side circuit and the MPPT circuit.

When a difference between a first current and a second current is greater than a specified value, the controller is configured to control the third bridge arm and the fourth bridge arm to be in a working state, where the working state is a state in which at least one switching transistor in the bridge arm continuously switches between an on state and an off state. The first current is an output current of the first photovoltaic module connected to the first positive input and the first negative input, and the second current is an output current of the second photovoltaic module connected to the second positive input and the second negative input.

When only the first current is detected, the controller is further configured to control the third bridge arm and the fourth bridge arm to be in the working state, and control a switching transistor of the lower bridge arm in the bridge arm of the primary-side circuit to be in the off state. When only the second current is detected, the controller is further configured to control the third bridge arm and the fourth bridge arm to be in the working state, and a switching transistor of the upper bridge arm in the bridge arm of the primary-side circuit to be in the off state. In this way, normal working can be implemented when the single photovoltaic module is connected, to resolve a compatibility problem

The following describes, with reference to specific embodiments, a circuit topology and a working principle of the power converter provided in this application.

Refer to FIG. 2. In some embodiments of this application, the midpoint of the first bridge arm M1 may be directly connected to one end of the primary-side winding of the transformer T, and the midpoint of the second bridge arm M2 may be directly connected to the other end of the primary-side winding of the transformer T. The third bridge arm M3 of the MPPT circuit may include a third switching transistor S31a and a fourth switching transistor S32a that are connected in series and have opposite freewheeling directions, and the fourth bridge arm M4 of the MPPT circuit may include a third switching transistor S31b and a fourth switching transistor S32b that are connected in series and have opposite freewheeling directions. Specifically, it may be defined that two ports of each switching transistor connected to the bridge arm are a port 1 and a port 2 respectively. When the switching transistor is turned on, a current may flow in from the port 1 and flow out from the port 2, or may flow in from the port 2 and flow out from the port 1. When the switching transistor is in a freewheeling state, a current flows in from the port 2 and flows out from the port 1. In the third bridge arm M3, a port 1 of the third switching transistor S31a may be connected to a port 1 of the fourth switching transistor S32a, a port 2 of the third switching transistor S31a is connected to the first negative input IN1-, and a port 2 of the fourth switching transistor S32a is connected to the connection point between the first switching transistor S11a and the second switching transistor S12a. Alternatively, a port 2 of the third switching transistor S31a may be connected to a port 2 of the fourth switching transistor S32a, a port 1 of the third switching transistor S31a is connected to the first negative input IN1-, and a port 1 of the fourth switching transistor S32a is connected to the connection point between the first switching transistor S11a and the second switching transistor S12a. Similarly, in the fourth bridge arm M4, a port 1 of the third switching transistor S31b may be connected to a port 1 of the fourth switching transistor S32b, a port 2 of the third switching transistor S31b is connected to a connection point connected to the second positive input IN2+, and a port 2 of the fourth switching transistor S32b is connected to the connection point between the first switching transistor S11b and the second switching transistor S12b. Alternatively, a port 2 of the third switching transistor S31b may be connected to a port 2 of the fourth switching transistor S32b, a port 1 of the third switching transistor S31b is connected to the second positive input IN2+, and a port 1 of the fourth switching transistor S32b is connected to the connection point between the first switching transistor S11b and the second switching transistor S12b.

The following describes a working principle of the power converter shown in FIG. 2.

For ease of describing the working principle of this embodiment, an output current of the first photovoltaic module PV1 connected to the first positive input IN1+ and the first negative input IN1- is denoted as a first current I1, an output current of the second photovoltaic module PV1 connected to the second positive input IN2+ and the second negative input IN2- is denoted as a second current I2, and output voltages of the first photovoltaic module PV1 and the second photovoltaic module PV2 are denoted as U1 and U2 respectively. The first photovoltaic module PV1 and the first photovoltaic module PV2 are considered to have consistent module performance, that is, the first photovoltaic module PV1 and the second photovoltaic module PV2 have same working performance under a same environment condition.

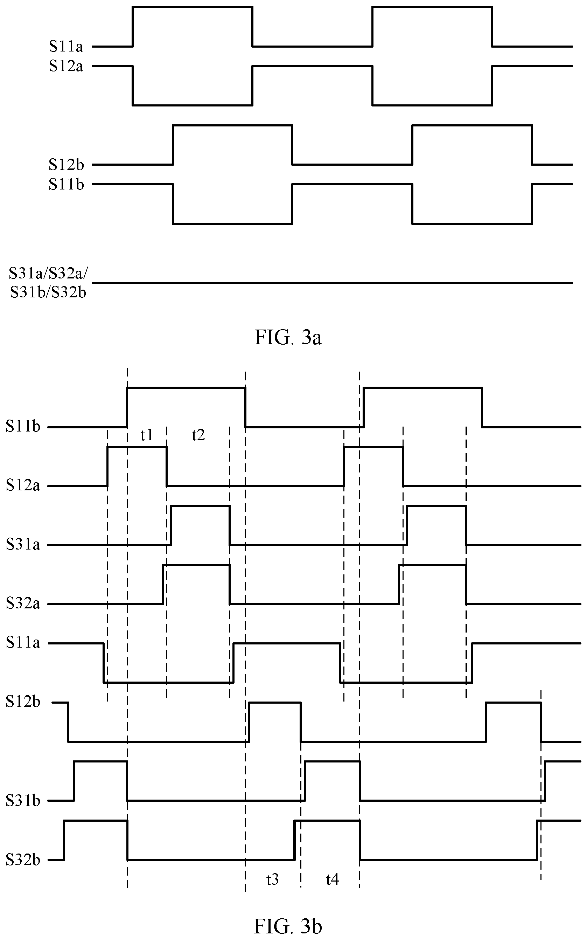

In an ideal working case, that is, when the first photovoltaic module PV1 and the second photovoltaic module PV2 are not shaded, for example, when the first photovoltaic module PV1 and the second photovoltaic module PV2 are subject to same irradiance and same temperature, current-voltage characteristic curves (briefly referred to as I-V curves below) of the photovoltaic modules are the same. In this case, the first photovoltaic module PV1 and the second photovoltaic module PV2 have a same output current and output voltage, where I1 is equal to I2, and U1 is equal to U2, and both are in a maximum power output state, that is, the difference between the first current and the second current is less than the specified value. Because the first photovoltaic module PV1 and the second photovoltaic module PV2 are already in the maximum power output state, in this case, the bridge arm in the MPPT circuit is in the off state, that is, a current cannot flow through the bridge arm. For example, with reference to FIG. 3a, the third switching transistors S31a and S31b and the fourth switching transistors S32a and S32b may all be in the off state, so that the third bridge arm M3 and the fourth bridge arm M4 are in the off state. Alternatively, only the fourth switching transistors S32a and S32b need to be in the off state, so that it can be ensured that the third bridge arm M3 and the fourth bridge arm M4 are in the off state, and states of the third switching transistors S31a and S31b may not be limited. For example, the third switching transistors S31a and S31b may be in the on state or the working state. Specifically, the working state is a state in which the switching transistor continuously switches between the on state and the off state. The primary-side circuit may perform driving control according to a complementary driving principle of a full-bridge circuit, to implement common MPPT tracking on the first photovoltaic module PV1 and the second photovoltaic module PV2. For example, with reference to FIG. 3a, the upper bridge arm and the lower bridge arm in the first bridge arm M1 of the primary-side circuit, that is, the first switching transistor S11a and the second switching transistor S12a, are complementarily turned on, and the upper bridge arm and the lower bridge arm in the second bridge arm M2, that is, the first switching transistor S11b and the second switching transistor S12b, are complementarily turned on. In addition, the first switching transistor S11a and the second switching transistor S12b may be turned on with a phase shift, or may be simultaneously turned on. That a switching transistor A and a switching transistor B are complementarily turned on means that the switching transistor B is in the off state when the switching transistor A is in the on state, and the switching transistor B is in the on state when the switching transistor A is in the off state. In addition, there may be specific dead time between a moment at which the switching transistor A switches between the on state and the off state and a moment at which the switching transistor B switches between the on state and the off state. The dead time may be dynamically adjusted with different input and output voltages and frequencies, to achieve optimal effect. That the switching transistor A and the switching transistor B are turned on with a phase shift means that there is specific dead time when the switching transistor A and the switching transistor B switch between the on state and the off state. For example, after the switching transistor A switches from the off state to the on state, specified duration elapses, and then the switching transistor B switches from the off state to the on state.

If the first photovoltaic module PV1 or the second photovoltaic module PV2 deviates from a maximum power output state due to an environmental condition change or another factor of the first photovoltaic module PV1 and the second photovoltaic module PV2, the MPPT circuit needs to work, so that the first photovoltaic module PV1 or the second photovoltaic module PV2 re-work in the maximum power output state. The following uses an example in which the second photovoltaic module PV2 is shaded for more detailed description. After the second photovoltaic module PV2 is shaded, an output current of the second photovoltaic module PV2, that is, the second current I2, decreases. To be specific, when the second current is less than the first current and the difference between the first current and the second current is greater than the specified value, it indicates that the second photovoltaic module PV2 deviates from the maximum power output state, and the bridge arm in the MPPT circuit needs to be enabled to switch from the off state to the working state, that is, a state in which the bridge arm continuously switches between a conduction current and a cut-off current, to perform MPPT tracking. Specifically, the upper bridge arm of the first bridge arm M1 and the upper bridge arm of the second bridge arm M2 may be controlled to be complementarily turned on. When the upper bridge arm of the first bridge arm M1, that is, the first switching transistor S11a, is controlled to be in the on state, the fourth bridge arm M4 and the lower bridge arm of the second bridge arm M2, that is, the second switching transistor S12b, may be controlled to be complementarily turned on. When the upper bridge arm of the second bridge arm M2, that is, the first switching transistor S11b, is controlled to be in the on state, the third bridge arm M3 and the lower bridge arm of the first bridge arm M1, that is, the second switching transistor S12a, may be controlled to be complementarily turned on. In this case, output voltages of the first photovoltaic module PV1 and the second photovoltaic module PV2 may be the same, or may be different.

For example, the signal time sequence diagram shown in FIG. 3b is used as an example. One control period may be divided into four consecutive time periods. In a time period t1, the upper bridge arm of the second bridge arm M2, that is, the first switching transistor S11b, and the lower bridge arm of the first bridge arm M1, that is, the second switching transistor S12a, are in the on state, the third bridge arm M3 and the fourth bridge arm M4 are in the off state, the first photovoltaic module PV1 and the second photovoltaic module PV2 that are connected in series and the primary-side winding of the transformer T form a current loop, and the first photovoltaic module PV1 and the second photovoltaic module PV2 jointly output a current. In a time period t2, the upper bridge arm of the second bridge arm M2, that is, the first switching transistor S11b, and the fourth switching transistor S32a of the third bridge arm M3, are in the on state, and a state of the third switching transistor S31a may not be limited. For example, the third switching transistor S31a may be in the on state, the current of the first photovoltaic module PV1 and the primary-side winding of the transformer T form a current loop, and only the first photovoltaic module PV1 outputs a current. In a time period t3, the upper bridge arm of the first bridge arm M1, that is, the first switching transistor S11a, and the lower bridge arm of the second bridge arm M2, that is, the second switching transistor S12b, are in the on state, the third bridge arm M3 and the fourth bridge arm M4 are in the off state, the first photovoltaic module PV1 and the second photovoltaic module PV2 that are connected in series and the primary-side winding of the transformer T form a current loop, and the first photovoltaic module PV1 and the second photovoltaic module PV2 jointly output a current. In a time period t4, the upper bridge arm of the first bridge arm M1, that is, the first switching transistor S11a, and the fourth switching transistor S32b of the fourth bridge arm M4 are in the on state, and a state of the third switching transistor S31b may not be limited. For example, the third switching transistor S31b may be in the on state, the current of the first photovoltaic module PV1 and the primary-side winding of the transformer T form a current loop, and only the first photovoltaic module PV1 outputs a current. It can be learned that in one control period, the first photovoltaic module PV1 with a larger output current is always in a current output state, and the second photovoltaic module PV2 with a smaller output current outputs a current only in the time periods t1 and t3. Output current duration of the first photovoltaic module PV1 is longer than output current duration of the second photovoltaic module PV2, to reduce the difference between the output currents of the first photovoltaic module PV1 and the second photovoltaic module PV2.

Similarly, after the first photovoltaic module PV1 is shaded, an output current of the first photovoltaic module PV1, that is, the first current I1, decreases. To be specific, when the first current is less than the second current and the difference between the first current and the second current is greater than the specified value, it indicates that the first photovoltaic module PV1 deviates from the maximum power output state, and the bridge arm in the MPPT circuit needs to be enabled to switch from the off state to the working state, that is, the bridge arm continuously switches between a conduction current and a cut-off current, to perform MPPT tracking. Specifically, the lower bridge arm of the first bridge arm M1 and the lower bridge arm of the second bridge arm M2 may be controlled to be complementarily turned on. When the lower bridge arm of the first bridge arm M1, that is, the second switching transistor S12a, is controlled to be in the on state, the fourth bridge arm M4 and the upper bridge arm of the second bridge arm M2, that is, the first switching transistor S11b, may be controlled to be complementarily turned on. When the lower bridge arm of the second bridge arm M2, that is, the second switching transistor S12b, is controlled to be in the on state, the third bridge arm M3 and the upper bridge arm of the first bridge arm M1, that is, the first switching transistor S11a, may be controlled to be complementarily turned on.

In addition, proportions of the time periods t2 and t4 in one control period may be adjusted based on the difference between the first current and the second current. For example, when the second photovoltaic module PV2 is heavily shaded, the difference between the first current and the second current is large. In this case, on duration of the third bridge arm M3 and the fourth bridge arm M4 should be increased, that is, duty cycles of switching transistors of the third bridge arm M3 and the fourth bridge arm M4 should be increased, to increase the output current duration of the first photovoltaic module PV1. Therefore, it may be considered that on duration of the switching transistor of the bridge arm in the MPPT circuit is positively correlated with the difference between the first current and the second current.

If the inputs of the power converter are connected to only one photovoltaic module, that is, only the second current is detected, the switching transistor of the upper bridge arm in the bridge arm of the primary-side circuit may be controlled to be in the off state; or when only the first current is detected, the switching transistor of the lower bridge arm in the bridge arm of the primary-side circuit is controlled to be in the off state. In addition, the bridge arm in the MPPT circuit is controlled to be in the working state, that is, a state in which at least one switching transistor in the bridge arm continuously switches between the on state and the off state. A bridge arm in the working state in the MPPT circuit may replace an upper bridge arm or a lower bridge arm in the off state in the primary-side circuit, and form a full-bridge circuit with an upper bridge arm or a lower bridge arm in the working state in the primary-side circuit, and driving control is performed according to the complementary driving principle, to implement MPPT tracking on one photovoltaic module.

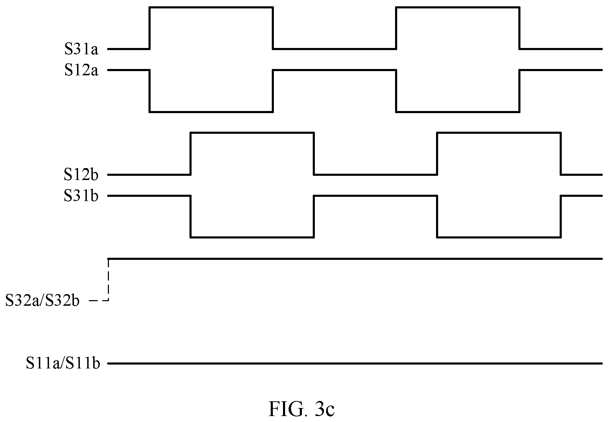

For example, when the first positive input IN1+ and the first negative input IN1- are in an idle state without installation of a photovoltaic module, only the second photovoltaic module PV2 is connected, that is, only the second current is detected. In the primary-side circuit, the upper bridge arm of the first bridge arm M1 and the upper bridge arm of the second bridge arm M2 are in the off state, that is, the first switching transistors S11a and S11b connected to the first positive input IN1+ are in the off state. The third bridge arm M3 in the MPPT circuit, in place of the first switching transistor S11a, and the lower bridge arm of the first bridge arm M1 may be complementarily turned on, and the fourth bridge arm M4, in place of the first switching transistor S11b, and the lower bridge arm of the second bridge arm M2 may be complementarily turned on. For example, with reference to FIG. 3c, states of the fourth switching transistors S32a and S32b may not be limited. For example, the fourth switching transistors S32a and S32b may be in the on state. The third switching transistor S31a, in place of the upper bridge arm of the first bridge arm M1, that is, the first switching transistor S11a, and the lower bridge arm, that is, the second switching transistor S12a, are complementarily turned on. The third switching transistor S31b, in place of the upper bridge arm of the second bridge arm M2, that is, the first switching transistor S11b, and the lower bridge arm, that is, the second switching transistor S12b, are complementarily turned on. In addition, the third switching transistor S31a and the second switching transistor S12b may be turned on with a phase shift, or may be simultaneously turned on.

Similarly, when the second positive input IN2+ and the second negative input IN2- are in an idle state without installation of a photovoltaic module, only the first photovoltaic module PV1 is connected, that is, only the first current is detected. In the primary-side circuit, the lower bridge arm of the first bridge arm M1 and the lower bridge arm of the second bridge arm M2 are in the off state, that is, the second switching transistors S12a and S12b connected to the second negative input IN2- are in the off state. The third bridge arm M3 in the MPPT circuit, in place of the second switching transistor S12a, and the upper bridge arm of the first bridge arm M1 may be complementarily turned on, and the fourth bridge arm M4, in place of the second switching transistor S12b, and the upper bridge arm of the second bridge arm M2 may be complementarily turned on.

FIG. 3a, FIG. 3b, and FIG. 3c are merely examples for describing driving time sequences of the switching transistors in the MPPT circuit and the primary-side circuit in different working conditions. An actual driving time sequence of the switching transistors is not limited to the foregoing time sequences.

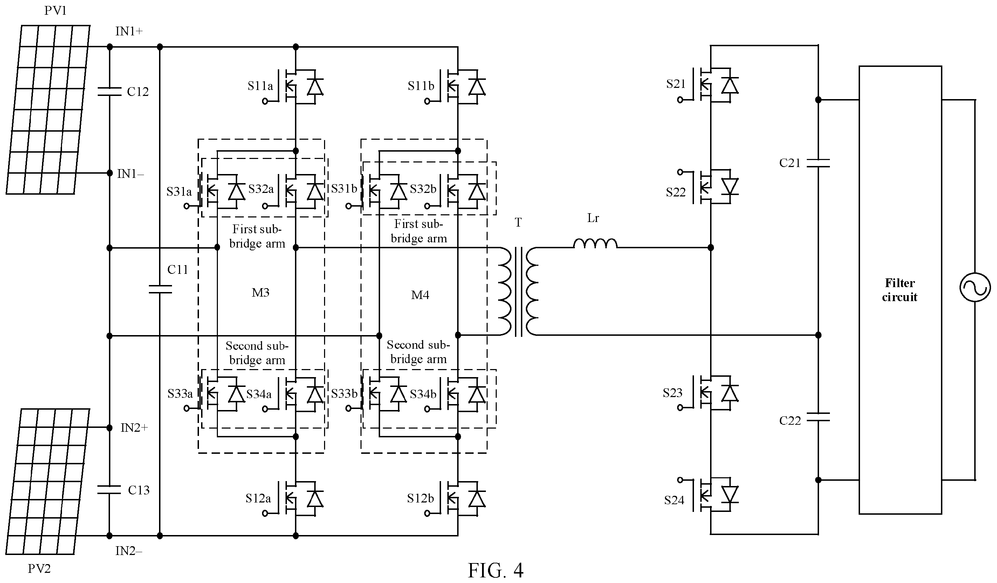

Refer to FIG. 4. In some other embodiments of this application, the midpoint of the first bridge arm M1 may be indirectly connected to one end of the primary-side winding of the transformer T, and the midpoint of the second bridge arm M2 may be indirectly connected to the other end of the primary-side winding of the transformer T. Each of the third bridge arm M3 and the fourth bridge arm M4 in the MPPT circuit may include two sub-bridge arms that are connected in parallel, that is, a first sub-bridge arm and a second sub-bridge arm. The two sub-bridge arms of the third bridge arm M3 are connected in parallel between the first negative input IN1- and one end of the primary-side winding of the transformer T. Specifically, one end of each of the first sub-bridge arm and the second sub-bridge arm of the third bridge arm M3 is connected to the first negative input IN1-, and the other end of each of the first sub-bridge arm and the second sub-bridge arm of the third bridge arm M3 is connected to one end of the primary-side winding of the transformer T. The two sub-bridge arms of the fourth bridge arm M4 are connected in parallel between the second positive input IN2+ and the other end of the primary-side winding of the transformer T. Specifically, one end of each of the first sub-bridge arm and the second sub-bridge arm of the fourth bridge arm M4 is connected to the second positive input IN2+, and the other end of each of the first sub-bridge arm and the second sub-bridge arm of the fourth bridge arm M4 is connected to the other end of the primary-side winding of the transformer T. Each of the two sub-bridge arms connected in parallel includes two switching transistors that are connected in series and have opposite freewheeling directions, and a connection point between the two switching transistors that are connected in series and have the opposite freewheeling directions is a midpoint of the corresponding sub-bridge arm. A midpoint of one sub-bridge arm of the third bridge arm M3 is connected to the upper bridge arm of the first bridge arm M1, and a midpoint of the other sub-bridge arm of the third bridge arm M3 is connected to the lower bridge arm of the first bridge arm M1. A midpoint of one sub-bridge arm of the fourth bridge arm M4 is connected to the upper bridge arm of the second bridge arm M2, and a midpoint of the other sub-bridge arm of the fourth bridge arm M4 is connected to the lower bridge arm of the second bridge arm M2. Specifically, the first sub-bridge arm of the third bridge arm M3 includes a third switching transistor S31a and a fourth switching transistor S32a that are connected in series and have opposite freewheeling directions, the third switching transistor S31a is connected to the first negative input IN1-, the fourth switching transistor S32a is connected to one end of the primary-side winding of the transformer T, and a midpoint of the first sub-bridge arm, that is, a connection point between the third switching transistor S31a and the fourth switching transistor S32a, is connected to the upper bridge arm of the first bridge arm M1, that is, the first switching transistor S11a. The second sub-bridge arm of the third bridge arm M3 includes a fifth switching transistor S33a and a sixth switching transistor S34a that are connected in series and have opposite freewheeling directions, the fifth switching transistor S33a is connected to the first negative input IN1-, the sixth switching transistor S34a is connected to the other end of the primary-side winding of the transformer T, and a midpoint of the second sub-bridge arm, that is, a connection point between the fifth switching transistor S33a and the sixth switching transistor S34a, is connected to the lower bridge arm of the first bridge arm M1, that is, the second switching transistor S12a. The first sub-bridge arm of the fourth bridge arm M4 includes a third switching transistor S31b and a fourth switching transistor S32b that are connected in series and have opposite freewheeling directions, the third switching transistor S31b is connected to the second positive input IN2+, the fourth switching transistor S32b is connected to the other end of the primary-side winding of the transformer T, and a midpoint of the first sub-bridge arm, that is, a connection point between the third switching transistor S31b and the fourth switching transistor S32b, is connected to the upper bridge arm of the second bridge arm M2, that is, the first switching transistor S11b. The second sub-bridge arm of the fourth bridge arm M4 includes a fifth switching transistor S33b and a sixth switching transistor S34b that are connected in series and have opposite freewheeling directions, the fifth switching transistor S33b is connected to the second positive input IN2+, the sixth switching transistor S34b is connected to the other end of the primary-side winding of the transformer T, and a midpoint of the second sub-bridge arm, that is, a connection point between the fifth switching transistor S33b and the sixth switching transistor S34b, is connected to the lower bridge arm of the second bridge arm M2, that is, the second switching transistor S12b.

The following describes a working principle of the power converter shown in FIG. 4.

In an ideal working case, that is, when the first photovoltaic module PV1 and the second photovoltaic module PV2 are not shaded, for example, when the first photovoltaic module PV1 and the second photovoltaic module PV2 are subject to same irradiance and same temperature, current-voltage characteristic curves (briefly referred to as I-V curves below) of the photovoltaic modules are the same. In this case, the first photovoltaic module PV1 and the second photovoltaic module PV2 have a same output current and output voltage, where I1 is equal to I2, and U1 is equal to U2, and both are in a maximum power output state, that is, the difference between the first current and the second current is less than the specified value. Because the first photovoltaic module PV1 and the second photovoltaic module PV2 are already in the maximum power output state, in this case, one switching transistor in the sub-bridge arm in the MPPT circuit is in the off state, and the switching transistor is a switching transistor connected to the first negative input IN1- or the second positive input IN2+.

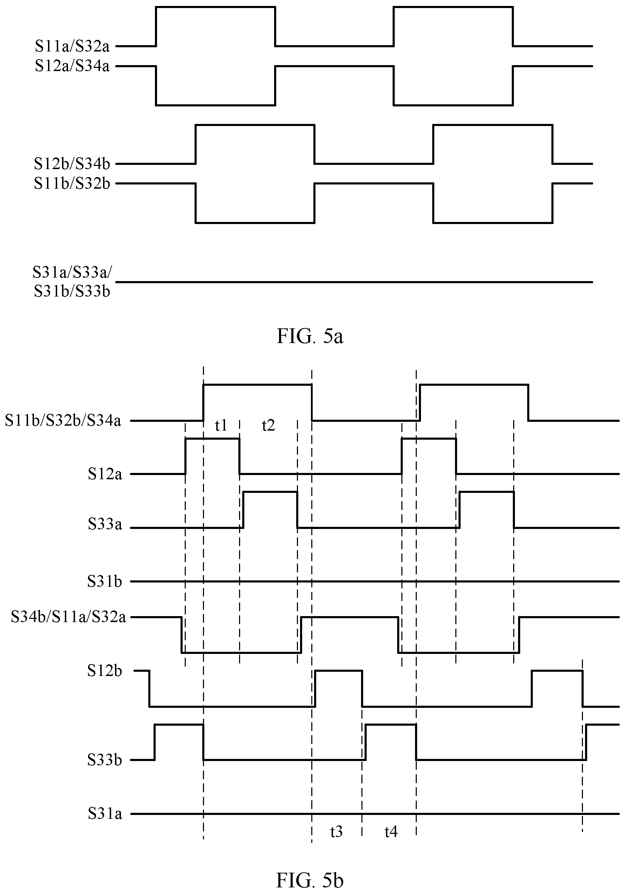

For example, with reference to FIG. 5a, the third switching transistors S31a and S31b are in the off state, and the fifth switching transistors S33a and S33b are in the off state. The other switching transistor in the sub-bridge arm may be in the working state or may be in the on state, and driving control may be performed with reference to the switching transistors in the primary-side circuit according to the complementary driving principle of the full-bridge circuit, to implement common MPPT tracking on the first photovoltaic module and the second photovoltaic module. For example, with reference to FIG. 5a, in the primary-side circuit, the working state of the upper bridge arm of the first bridge arm M1, that is, the first switching transistor S11a, and the working state of the fourth switching transistor S32a are similar, the working state of the lower bridge arm of the first bridge arm M1, that is, the second switching transistor S12a, and the working state of the sixth switching transistor S34a are similar, and the first switching transistor S11a and the fourth switching transistor S32a are complementarily turned on with the second switching transistor S12a and the sixth switching transistor S34a; and the working state of the upper bridge arm of the second bridge arm M2, that is, the first switching transistor S11b, and the working state of the fourth switching transistor S32b are similar, the working state of the lower bridge arm of the second bridge arm M1, that is, the second switching transistor S12b, and the working state of the sixth switching transistor S34b are similar, the first switching transistor S11b and the fourth switching transistor S32b are complementarily turned on with the second switching transistor S12b and the sixth switching transistor S34b, and the first switching transistor S11a and the second switching transistor S12b may be turned on with a phase shift.

If the first photovoltaic module PV1 or the second photovoltaic module PV2 deviates from a maximum power output state due to an environmental condition change or another factor of the first photovoltaic module PV1 and the second photovoltaic module PV2, the MPPT circuit needs to work, so that the first photovoltaic module PV1 or the second photovoltaic module PV2 re-work in the maximum power output state. The following uses an example in which the second photovoltaic module PV2 is shaded for more detailed description. After the second photovoltaic module PV2 is shaded, the output current of the second photovoltaic module PV2, that is, the second current I2, decreases. To be specific, when the second current is less than the first current and the difference between the first current and the second current is greater than the specified value, it indicates that the second photovoltaic module PV2 deviates from the maximum power output state, a switching transistor connected to the first negative input IN1- in the third bridge arm M3 needs to be kept in the off state, and a switching transistor connected to the second positive input IN1+ in the fourth bridge arm M4 needs to be kept in the off state. In addition, a part of switching transistors in the MPPT circuit are enabled to switch from the off state to the working state or the on state, to perform MPPT tracking. Specifically, both the third switching transistors S31a and S31b of the third bridge arm M3 and the fourth bridge arm M4 may be controlled to be in the off state. The upper bridge arm of the first bridge arm M1, that is, the first switching transistor S11a, the fourth switching transistor S32a of the third bridge arm M3, and the sixth switching transistor S34b of the fourth bridge arm M4 are controlled to be in a same working state, and the upper bridge arm of the second bridge arm M2, that is, the first switching transistor S11b, the fourth switching transistor S32b of the fourth bridge arm M4, and the sixth switching transistor S34a of the third bridge arm M3 are controlled to be in a same working state, and are complementarily turned on with the foregoing three switching transistors. When the upper bridge arm of the first bridge arm M1, that is, the first switching transistor S11a, the fourth switching transistor S32a of the third bridge arm M3, and the sixth switching transistor S34b of the fourth bridge arm M4 are controlled to be in the on state simultaneously, the fifth switching transistor S33b of the fourth bridge arm M4 and the lower bridge arm of the second bridge arm M2, that is, the second switching transistor S12b, may be controlled to be complementarily turned on. When the upper bridge arm of the second bridge arm M2, that is, the first switching transistor S11b, the fourth switching transistor S32b of the fourth bridge arm M4, and the sixth switching transistor S34a of the third bridge arm M3 are controlled to be in the on state simultaneously, the fifth switching transistor S33a of the third bridge arm M3 and the lower bridge arm of the first bridge arm M1, that is, the second switching transistor S12a, may be controlled to be complementarily turned on. In this case, output voltages of the first photovoltaic module PV1 and the second photovoltaic module PV2 may be the same, or may be different.

For example, the signal time sequence diagram shown in FIG. 5b is used as an example. One control period may be divided into four consecutive time periods. In each time period, the third switching transistors S31a and S31b are both in the off state. In a time period t1, the first switching transistor S11b, the fourth switching transistor S32b, the sixth switching transistor S34a, and the second switching transistor S12a are in the on state, the first photovoltaic module PV1 and the second photovoltaic module PV2 that are connected in series and the primary-side winding of the transformer T form a current loop, and the first photovoltaic module PV1 and the second photovoltaic module PV2 jointly output a current. In a time period t2, the first switching transistor S11b, the fourth switching transistor S32b, the sixth switching transistor S34a, and the fifth switching transistor S33a are in the on state, a current of the first photovoltaic module PV1 and the primary-side winding of the transformer T form a current loop, and only the first photovoltaic module PV1 outputs a current. In a time period t3, the first switching transistor S11a, the fourth switching transistor S32a, the sixth switching transistor S34b, and the second switching transistor S12b are in the on state, the first photovoltaic module PV1 and the second photovoltaic module PV2 that are connected in series and the primary-side winding of the transformer T form a current loop, and the first photovoltaic module PV1 and the second photovoltaic module PV2 jointly output a current. In a time period t4, the first switching transistor S11a, the fourth switching transistor S32a, the sixth switching transistor S34b, and the fifth switching transistor S33b are in the on state, a current of the first photovoltaic module PV1 and the primary-side winding of the transformer T form a current loop, and only the first photovoltaic module PV1 outputs a current. It can be learned that in one control period, the first photovoltaic module PV1 with a larger output current is always in a current output state, and the second photovoltaic module PV2 with a smaller output current outputs a current only in the time periods t1 and t3. Output current duration of the first photovoltaic module PV1 is longer than output current duration of the second photovoltaic module PV2, to reduce the difference between the output currents of the first photovoltaic module PV1 and the second photovoltaic module PV2.

In actual application, in the time period t1 and t2, the first switching transistor S11b and the fourth switching transistor S32b may be simultaneously turned on, and are turned on with a phase shift with the sixth switching transistor S34a. In the time periods t3 and t4, the first switching transistor S11a and the fourth switching transistor S32a may be simultaneously turned on, and are turned on with a phase shift with the sixth switching transistor S34b.

Similarly, after the first photovoltaic module PV1 is shaded, the output current of the first photovoltaic module PV1, that is, the first current I1, decreases. To be specific, when the first current is less than the second current and the difference between the first current and the second current is greater than the specified value, it indicates that the first photovoltaic module PV1 deviates from the maximum power output state, a switching transistor connected to the first negative input IN1- in the third bridge arm M3 needs to be kept in the off state, and a switching transistor connected to the second positive input IN1+ in the fourth bridge arm M4 needs to be kept in the off state. In addition, a part of switching transistors in the MPPT circuit are enabled to switch from the off state to the working state or the on state, to perform MPPT tracking. Specifically, the fifth switching transistors S33a and S33b of the third bridge arm M3 and the fourth bridge arm M4 may be controlled to be in the off state. The lower bridge arm of the first bridge arm M1, that is, the second switching transistor S12a, the sixth switching transistor S34a of the third bridge arm M3, and the fourth switching transistor S32b of the fourth bridge arm M4 are controlled to be in a same working state, and the lower bridge arm of the second bridge arm M2, that is, the second switching transistor S12b, the sixth switching transistor S34b of the fourth bridge arm M4, and the fourth switching transistor S32a of the third bridge arm M3 are controlled to be in a same working state, and are complementarily turned on with the foregoing three switching transistors. When the lower bridge arm of the first bridge arm M1, that is, the second switching transistor S12a, the sixth switching transistor S34a of the third bridge arm M3, and the fourth switching transistor S32b of the fourth bridge arm M4 are controlled to be in the on state simultaneously, the third switching transistor S31b of the fourth bridge arm M4 and the upper bridge arm of the second bridge arm M2, that is, the first switching transistor S11b, may be controlled to be complementarily turned on. When the lower bridge arm of the second bridge arm M2, that is, the second switching transistor S12b, the sixth switching transistor S34b of the fourth bridge arm M4, and the fourth switching transistor S32a of the third bridge arm M3 are controlled to be in the on state simultaneously, the third switching transistor S31a of the third bridge arm M3 and the upper bridge arm of the first bridge arm M1, that is, the first switching transistor S11a, may be controlled to be complementarily turned on.

In addition, proportions of the time periods t2 and t4 in one control period may be adjusted based on the difference between the first current and the second current. For example, when the second photovoltaic module PV2 is heavily shaded, the difference between the first current and the second current is large. In this case, on duration of the third bridge arm M3 and the fourth bridge arm M4 should be increased, that is, duty cycles of switching transistors of the third bridge arm M3 and the fourth bridge arm M4 should be increased, to increase the output current duration of the first photovoltaic module PV1. Therefore, it may be considered that on duration of the switching transistor of the bridge arm in the MPPT circuit is positively correlated with the difference between the first current and the second current.

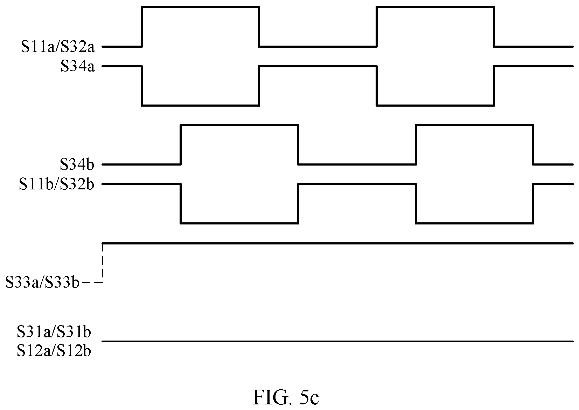

If the inputs of the power converter are connected to only one photovoltaic module, that is, only the first current is detected or only the second current is detected, the upper bridge arm in the bridge arm of the primary-side circuit may be controlled to be in the off state, or the lower bridge arm in the bridge arm of the primary-side circuit may be controlled to be in the off state, a switching transistor connected to the first negative input IN1- in the third bridge arm of the MPPT circuit may be controlled to be in the off state, and a switching transistor connected to the second positive input IN2+ in the fourth bridge arm may be controlled to be in the off state. For example, with reference to FIG. 5c, the third switching transistors S31a and S31b are in the off state, or the fifth switching transistors S33a and S33b are in the off state. In addition, another switching transistor in the MPPT circuit may be in the working state or the on state, and form a full-bridge circuit with an upper bridge arm or a lower bridge arm in the working state in the primary-side circuit, and driving control is performed according to the complementary driving principle, to implement MPPT tracking on one photovoltaic module.

For example, when the second positive input IN2+ and the second negative input IN2-are in an idle state without installation of a photovoltaic module, only the first photovoltaic module PV1 is connected, that is, only the first current is detected. In the primary-side circuit, the lower bridge arm of the first bridge arm M1 and the lower bridge arm of the second bridge arm M2 are in the off state, that is, the second switching transistors S12a and S12b connected to the second negative input IN2- are in the off state, and the third switching transistors S31a and S31b of the third bridge arm M3 and the fourth bridge arm M4 are in the off state. In addition, the second sub-bridge arm of the third bridge arm M3, in place of the lower bridge arm of the second bridge arm M2, and the upper bridge arm of the first bridge arm M1, that is, the first switching transistor S11a are complementarily turned on, and the second sub-bridge arm of the fourth bridge arm M4, in place of the lower bridge arm of the first bridge arm M1, and the upper bridge arm of the second bridge arm M2, that is, the first switching transistor S11b, are complementarily turned on. For example, the fifth switching transistors S33a and S33b may be in the on state, and the sixth switching transistors S34a and S34b may be in the working state; or the fifth switching transistors S33a and S33b may be in the working state, and the sixth switching transistors S34a and S34b may be in the on state; or the fifth switching transistors S33a and S33b and the sixth switching transistors S34a and S34b may be in the working state. The fourth switching transistors S32a and S32b may be in the on state or the working state. For example, with reference to FIG. 5c, the fifth switching transistors S33a and S33b are in the on state, the working state of the first switching transistor S11a in the first bridge arm M1 of the primary-side circuit and the working state of the fourth switching transistor S32a are similar, and the first switching transistor S11a and the fourth switching transistor S32a are complementarily turned on with the sixth switching transistor S34a; and the working state of the first switching transistor S11b in the second bridge arm M2 and the working state of the fourth switching transistor S32b are similar, the first switching transistor S11b and the fourth switching transistor S32b are complementarily turned on with the sixth switching transistor S34b, and the first switching transistor S11a and the sixth switching transistor S34a may be turned on with a phase shift.

Similarly, when the first positive input IN1+ and the first negative input IN1- are in an idle state without installation of a photovoltaic module, only the second photovoltaic module PV2 is connected, that is, only the second current is detected. In the primary-side circuit, the upper bridge arm of the first bridge arm M1 and the upper bridge arm of the second bridge arm M2 are in the off state, that is, the first switching transistors S11a and S11b connected to the first positive input IN1+ are in the off state, and the fifth switching transistors S33a and S33b of the third bridge arm M3 and the fourth bridge arm M4 are in the off state. In addition, the first sub-bridge arm of the third bridge arm M3, in place of the upper bridge arm of the second bridge arm M2, and the lower bridge arm of the first bridge arm M1, that is, the second switching transistor S12a, are complementarily turned on, and the first sub-bridge arm of the fourth bridge arm M4, in place of the upper bridge arm of the first bridge arm M1, and the lower bridge arm of the second bridge arm M2, that is, the second switching transistor S12b are complementarily turned on.

FIG. 5a, FIG. 5b, and FIG. 5c are merely examples for describing driving time sequences of the switching transistors in the MPPT circuit and the primary-side circuit in different working conditions. An actual driving time sequence of the switching transistors is not limited to the foregoing time sequences.

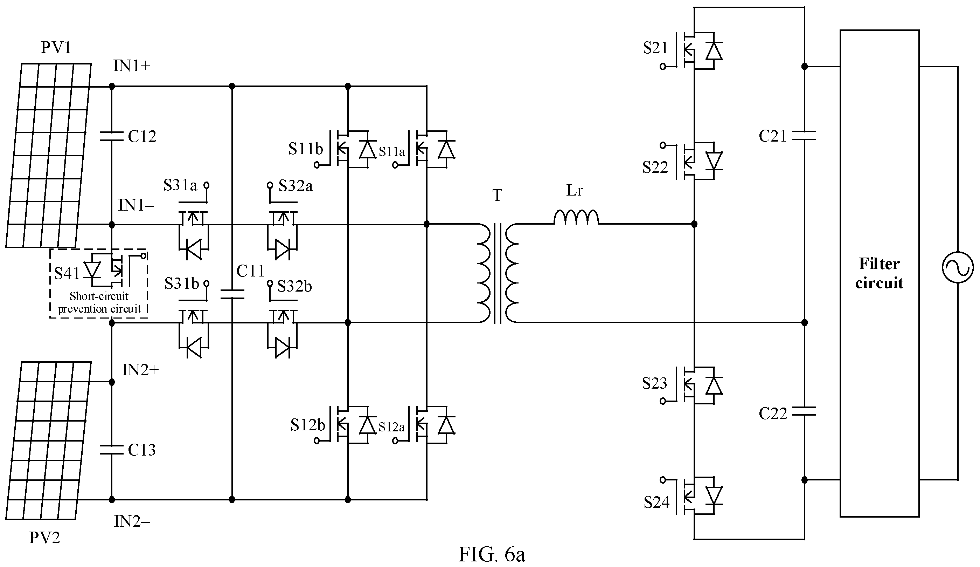

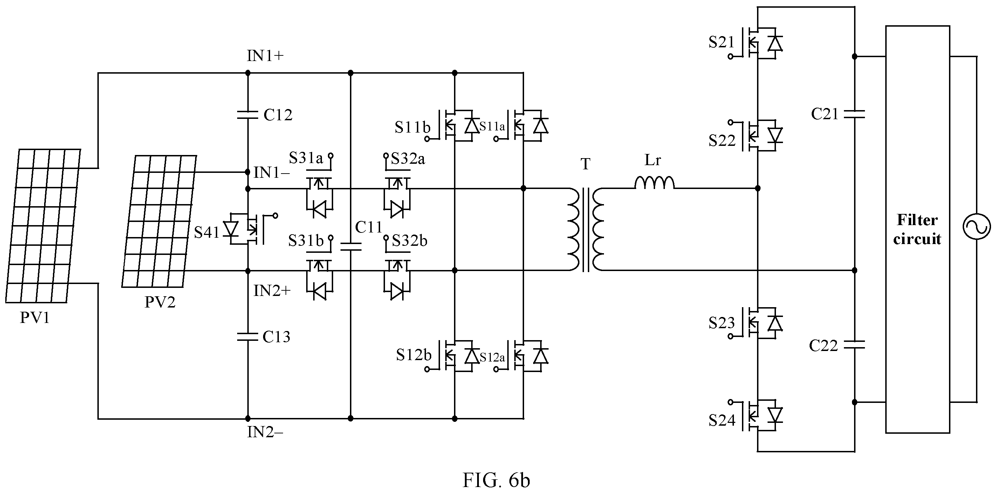

In an actual scenario of the power converter, because structures of positive output terminals of the first photovoltaic module PV1 and the second photovoltaic module PV2 are the same, and structures of negative output terminals of the first photovoltaic module PV1 and the second photovoltaic module PV2 are also the same, in an actual installation process, an installation person may incorrectly connect the first photovoltaic module PV1 and the second photovoltaic module PV2 to the power converter. In other words, in a case of the incorrect connection, an input of the power converter should be connected to a terminal of the first photovoltaic module PV1, but is incorrectly connected to a terminal of the second photovoltaic module PV2. FIG. 6b is a diagram of misconnection. It can be learned that compared with the correct connection method in FIG. 6a, in the case of the misconnection, a negative output of the first photovoltaic module PV1 is incorrectly connected to the second negative input IN2- of the power converter, and a negative output of the second photovoltaic module PV2 is incorrectly connected to the first negative input IN1- of the power converter. After the misconnection occurs, the output of the first photovoltaic module PV1 is used as a total input of the power converter in this case, and an entire power generation system of the power converter can still work normally. However, a loop formed by a positive output and the negative output of the second photovoltaic module PV2 causes a short circuit of the second photovoltaic module PV2, and causes a risk such as fire.

To avoid a problem that a photovoltaic module is short-circuited due to the incorrect connection of terminals, with reference to FIG. 6a and FIG. 6b, in some embodiments of this application, a short-circuit prevention circuit may be connected between the first negative input IN1- and the second positive input IN2+. The short-circuit prevention circuit may include at least one switch. A freewheeling direction of the switch is from the first negative input IN1- to the second positive input IN2+, and has a function of blocking a current from the second positive input IN2+ to the first negative input IN1-, so that formation of a short-circuit current between the positive output and the negative output of the second photovoltaic module PV2 can be effectively prevented, and a risk such as fire of the second photovoltaic module PV2 caused by the short circuit can be effectively avoided. The switch included in the short-circuit prevention circuit may be specifically implemented by using a metal-oxide-semiconductor field-effect transistor (metal-oxide-semiconductor field-effect transistor, MOSFET). A positive electrode of a diode connected in parallel to the MOSFET is connected to the first negative input IN1-, and a negative electrode of the diode is connected to the second positive input IN2+.

In this application, the disposed short-circuit prevention circuit may further have a function of improving safety when the power converter is powered off. Generally, an output voltage of a single photovoltaic module is relatively safe for a user. However, after output voltages of two photovoltaic modules are superimposed, a total output voltage of the two photovoltaic modules is high, which poses a threat to safety of the user. Specifically, in the embodiment shown in FIG. 2, when the power converter stops working, the user may be exposed to a high photovoltaic module output voltage, where the voltage is a sum of the output voltages of the first photovoltaic module PV1 and the second photovoltaic module PV2. This may pose a safety threat to the user. In the embodiment shown in FIG. 6a, the switching transistor in the short-circuit prevention circuit may be actively turned off, so that the user can be only exposed to the output voltage of one of the first photovoltaic module PV1 and the second photovoltaic module PV2 at most, to greatly reduce the safety threat to the user caused by the excessively high voltage.

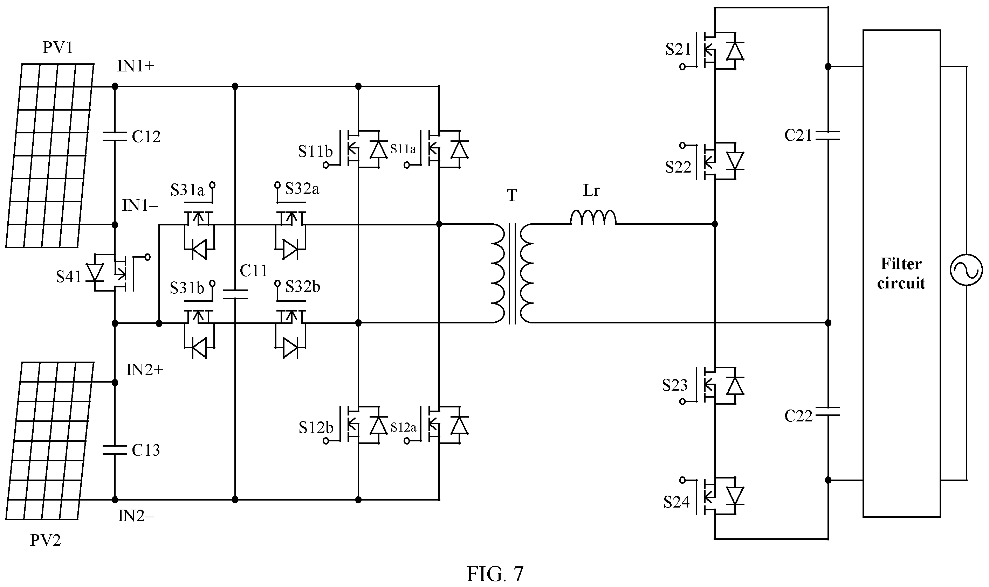

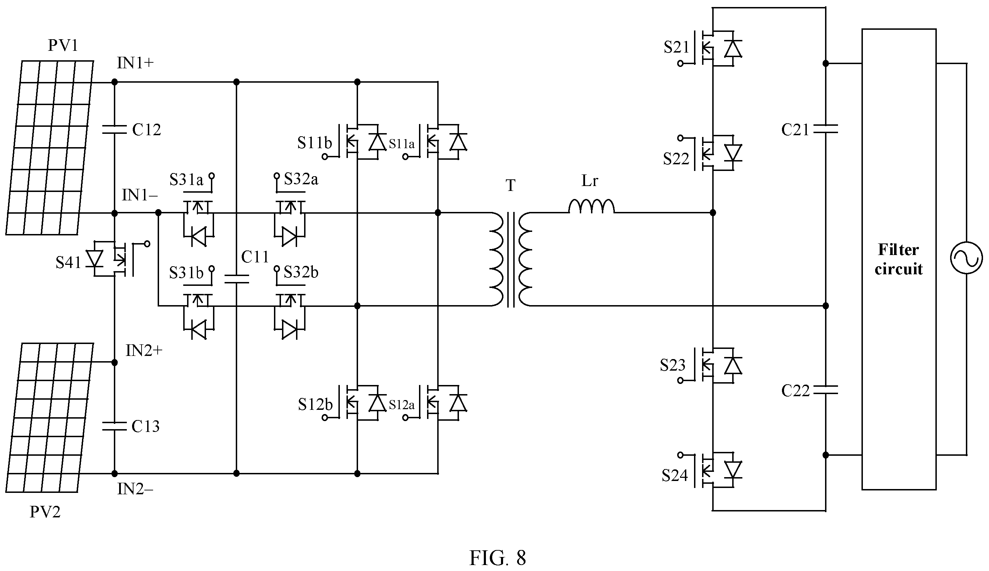

Refer to FIG. 6a. In some embodiments of this application, the short-circuit prevention circuit may specifically include a first switch S41. One end of the first switch S41 is connected to the first negative input IN1-, and the other end of the first switch S41 is connected to the second positive input IN2+. The third bridge arm M3 and the fourth bridge arm M4 may be connected to the first switch S41 in a plurality of manners. For example, with reference to FIG. 6a, one end of the third bridge arm M3 is connected to the first negative input IN1-, and one end of the fourth bridge arm M4 is connected to the second positive input IN2+. Alternatively, with reference to FIG. 7, both one end of the third bridge arm M3 and one end of the fourth bridge arm M4 are connected to the first negative input IN1-. Alternatively, with reference to FIG. 8, both one end of the third bridge arm M3 and one end of the fourth bridge arm M4 are connected to the second positive input IN2+.

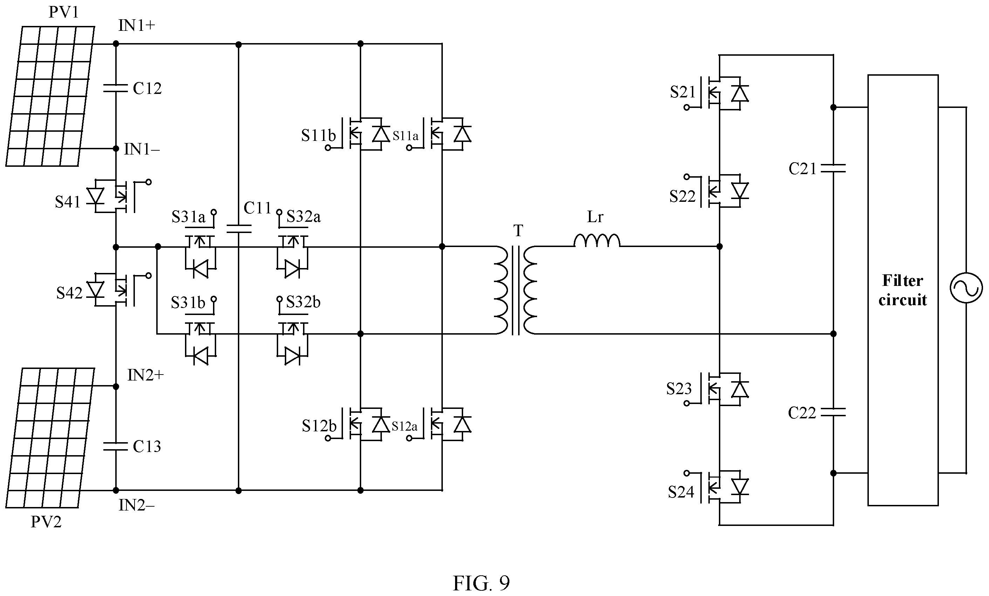

Refer to FIG. 9. In some other embodiments of this application, the short-circuit prevention circuit may also include a plurality of switches. For example, the short-circuit prevention circuit may include a first switch S41 and a second switch S42 that are connected in series between the first negative input IN1- and the second positive input IN2+, and both the third bridge arm M3 and the fourth bridge arm M4 may be connected to a connection point between the first switch S41 and the second switch S42.

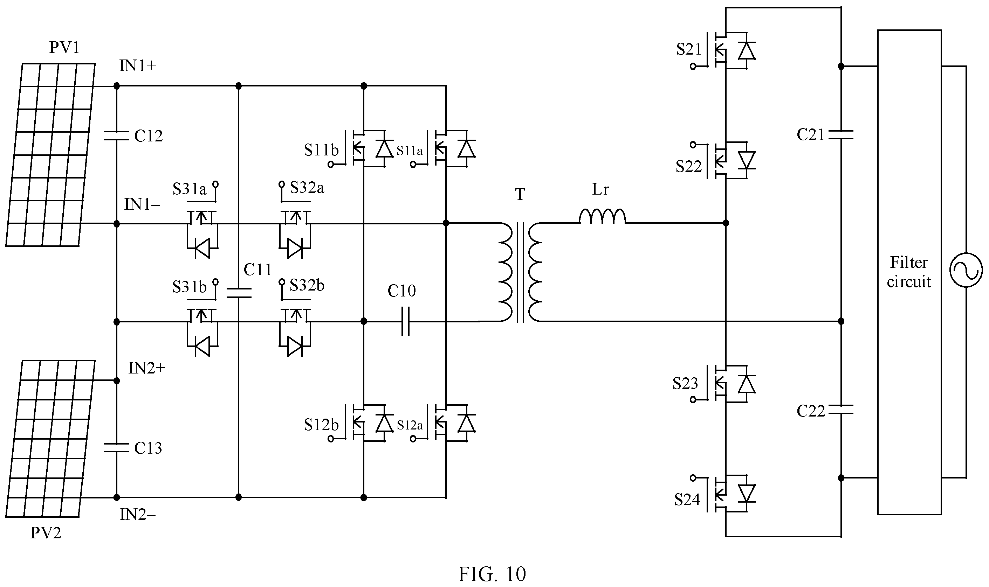

Refer to FIG. 10. In some embodiments of this application, the primary-side circuit may further include a direct-current blocking capacitor, that is, a first capacitor C10. The first capacitor C10 is connected between the midpoint of the first bridge arm M1 or the midpoint of the second bridge arm M2 and the transformer T. In FIG. 10, an example in which the first capacitor C10 is disposed between the midpoint of the second bridge arm M2 and the other end of the primary-side winding of the transformer T is used for description. The first capacitor C10 may reduce signal interference between the primary-side circuit and the transformer.

Refer to FIG. 2, FIG. 4, FIG. 6a, and FIG. 7 to FIG. 10. In some embodiments of this application, a plurality of direct-current blocking capacitors are usually disposed on a direct current side of the power converter, for example, a capacitor C11 disposed between the first positive input IN1+ and the second negative input IN2-, a capacitor C12 disposed between the first positive input IN1+ and the first negative input IN1-, and a second capacitor C13 disposed between the second positive input IN2+ and the second negative input IN2-.

Refer to FIG. 2, FIG. 4, FIG. 6a, and FIG. 7 to FIG. 10. In some embodiments of this application, the power converter may usually further include a filter circuit disposed on an alternating current side. The filter circuit is configured to suppress differential mode noise and common mode noise. Specifically, a single-stage EMI filter structure, a two-stage EMI filter structure, or the like may be used. This is not limited herein.

In this application, the secondary-side circuit may specifically implement functions of the secondary-side circuit by using a plurality of circuit topologies.

Refer to FIG. 2, FIG. 4, FIG. 6a, and FIG. 7 to FIG. 10. In some embodiments of this application, the secondary-side circuit may include a fifth bridge arm M5, the fifth bridge arm M5 includes an upper half-bridge arm and a lower half-bridge arm, the upper half-bridge arm includes two switching transistors having opposite freewheeling directions, for example, a seventh switching transistor S21 and an eighth switching transistor S22, the lower half-bridge arm includes two switching transistors having opposite freewheeling directions, for example, a ninth switching transistor S23 and a tenth secondary-side switching transistor S24. A connection point between the upper half-bridge arm and the lower half-bridge arm is connected to the inductive device Lr in series and then connected to one end of the secondary-side winding of the transformer T.

Refer to FIG. 2, FIG. 4, FIG. 6a, and FIG. 7 to FIG. 10. In some other embodiments of this application, the secondary-side circuit may further include a second capacitor C21 and a third capacitor C22. The second capacitor C21 and the third capacitor C22 may be used as resonant capacitors to form a resonant element with the inductive device Lr, or the second capacitor C21 and the third capacitor C22 may be used as voltage division capacitors. The second capacitor C21 and the third capacitor C22 are connected in series and then connected in parallel to the fifth bridge arm M5. A connection point between the second capacitor C21 and the third capacitor C22 is connected to the other end of the secondary-side winding of the transformer T.

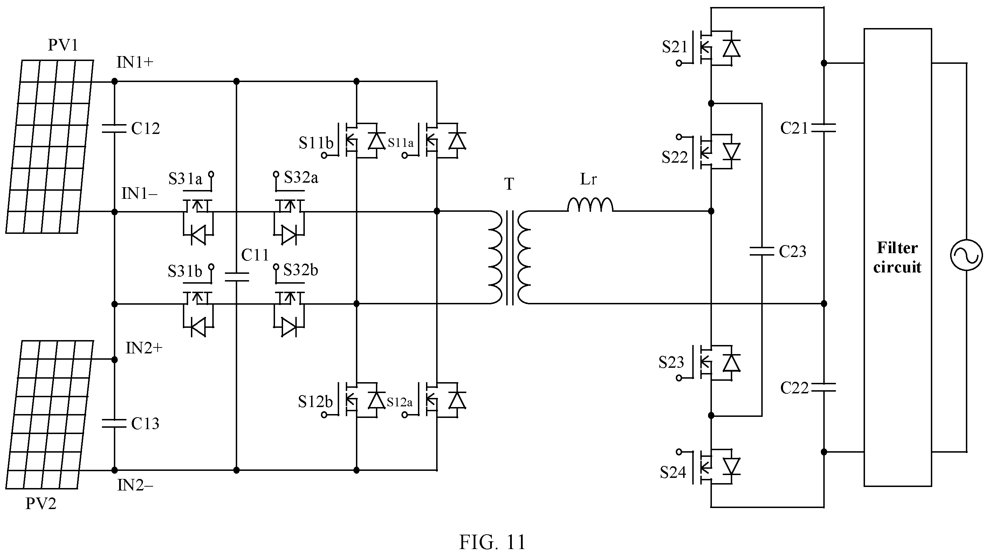

Refer to FIG. 11. In some other embodiments of this application, the secondary-side circuit may further include a fourth capacitor C23. The fourth capacitor C23 is connected between a connection point between the seventh switching transistor S21 and the eighth switching transistor S22 and a connection point between the ninth switching transistor S23 and the tenth switching transistor S24.

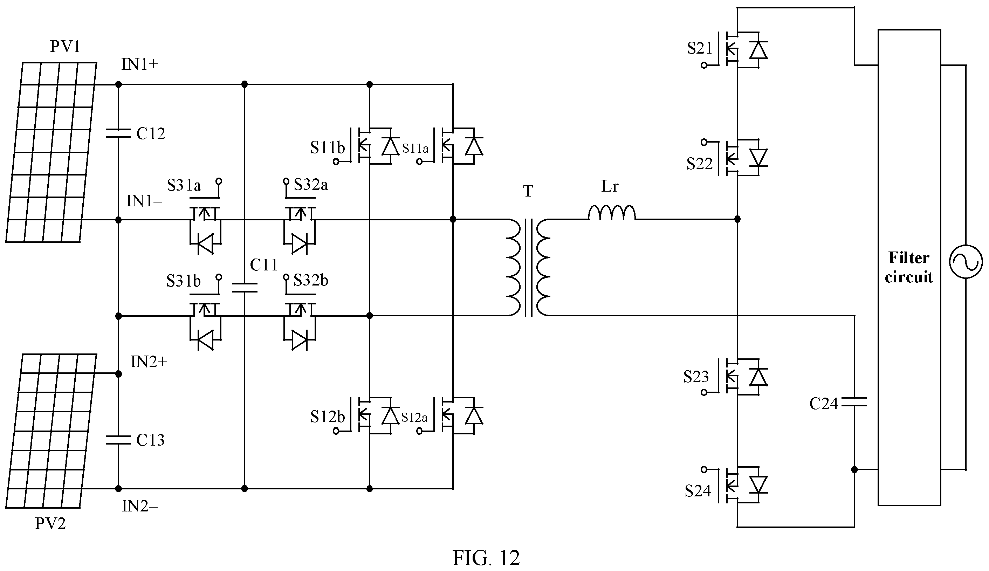

Refer to FIG. 12. In some other embodiments of this application, the secondary-side circuit may further include a fifth capacitor C24. The fifth capacitor C24 is connected between the upper half-bridge arm or the lower half-bridge arm and the other end of the secondary-side winding of the transformer T. In FIG. 12, an example in which the fifth capacitor C24 is connected between the lower half-bridge arm and the other end of the secondary-side winding of the transformer T is used for description.

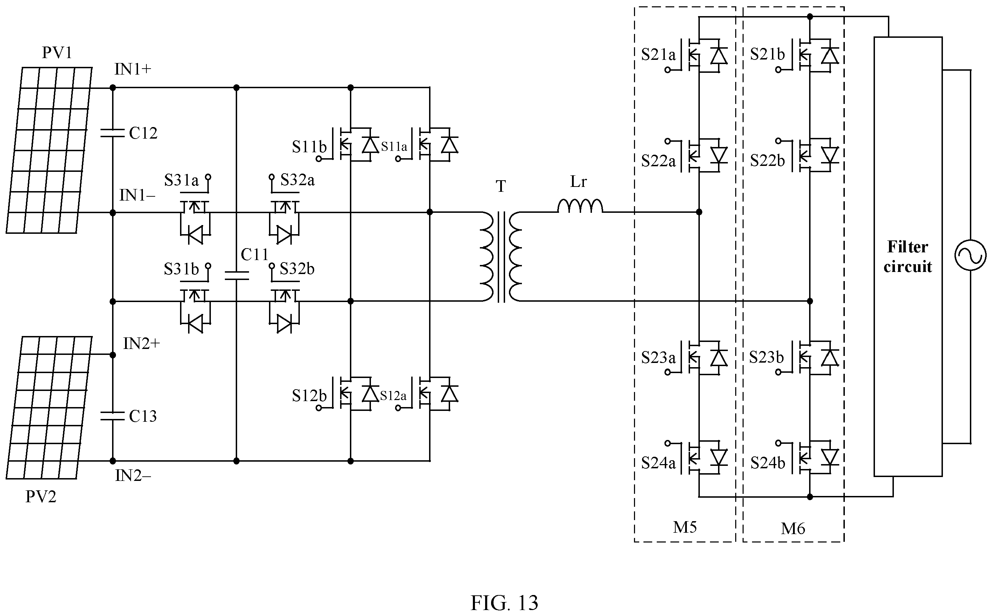

Refer to FIG. 13. In some other embodiments of this application, the secondary-side circuit may further include a sixth bridge arm M6 connected in parallel to the fifth bridge arm M5, the upper half-bridge arm of the fifth bridge arm M5 includes a seventh switching transistor S21a and an eighth switching transistor S22a having opposite freewheeling directions, the lower half-bridge arm of the fifth bridge arm M5 includes a ninth switching transistor S23a and a tenth switching transistor S24a having opposite freewheeling directions, an upper half-bridge arm of the sixth bridge arm M6 includes a seventh switching transistor S21b and an eighth switching transistor S22b having opposite freewheeling directions, and a lower half-bridge arm of the sixth bridge arm M6 includes a ninth switching transistor S23b and a tenth switching transistor S24b having opposite freewheeling directions. A connection point between the upper half-bridge arm and the lower half-bridge arm of the fifth bridge arm M5 is connected to the inductive device Lr in series and then connected to one end of the secondary-side winding of the transformer T, and a connection point between the upper half-bridge arm and the lower half-bridge arm of the sixth bridge arm M6 is connected to the other end of the secondary-side winding of the transformer T.

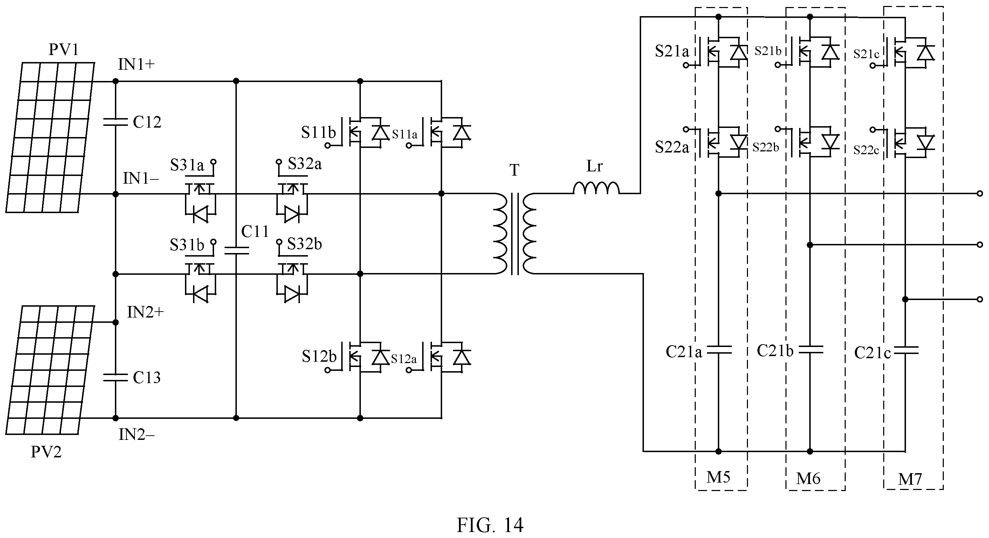

Refer to FIG. 14. In some other embodiments of this application, the secondary-side circuit may alternatively have a three-phase output. Specifically, the secondary-side circuit may include a fifth bridge arm M5, a sixth bridge arm M6, and a seventh bridge arm M7 that are connected in parallel. One end of each of the fifth bridge arm M5, the sixth bridge arm M6, and the seventh bridge arm M7 is connected to the inductive device Lr in series and then connected to one end of the secondary-side winding of the transformer T, and the other end of each of the fifth bridge arm M5, the sixth bridge arm M6, and the seventh bridge arm M7 is connected to the other end of the secondary-side winding of the transformer T. Specifically, each of the fifth bridge arm M5, the sixth bridge arm M6, and the seventh bridge arm M7 may include an upper half-bridge arm and a lower half-bridge arm. The upper half-bridge arm of the fifth bridge arm M5 includes a seventh switching transistor S21a and an eighth switching transistor S22a having opposite freewheeling directions, the lower half-bridge arm of the fifth bridge arm M5 includes a second capacitor C21a, and a connection point between the upper half-bridge arm and the lower half-bridge arm of the fifth bridge arm M5 is connected to a first output of the power converter. The upper half-bridge arm of the sixth bridge arm M6 includes a seventh switching transistor S21b and an eighth switching transistor S22b having opposite freewheeling directions, the lower half-bridge arm of the sixth bridge arm M6 includes a second capacitor C21b, and a connection point between the upper half-bridge arm and the lower half-bridge arm of the sixth bridge arm M6 is connected to a second output of the power converter. The upper half-bridge arm of the seventh bridge arm M7 includes a seventh switching transistor S21c and an eighth switching transistor S22c having opposite freewheeling directions, the lower half-bridge arm of the seventh bridge arm M7 includes a second capacitor C21c, and a connection point between the upper half-bridge arm and the lower half-bridge arm of the seventh bridge arm M7 is connected to a third output of the power converter.

It should be understood that the embodiments provided in FIG. 2, FIG. 4, FIG. 6a, and FIG. 7 to FIG. 14 may also be combined or modified to form a new circuit, and the new circuit should also fall within the protection scope claimed in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising a transformer, a primary-side circuit, a secondary-side circuit, a maximum power tracking MPPT (maximum power point voltage) circuit, and a controller, wherein
inputs of the power converter comprise a first positive input, a second positive input, a first negative input, and a second negative input, the first negative input is connected to the second positive input, the first positive input and the first negative input are configured to connect to a photovoltaic module, and the second positive input and the second negative input are configured to connect to another photovoltaic module or an energy storage battery;
the primary-side circuit is connected between the inputs of the power converter and the transformer, the primary-side circuit comprises a first bridge arm and a second bridge arm that are connected in parallel, two ends of each of the first bridge arm and the second bridge arm are respectively connected to the first positive input and the second negative input, each of the first bridge arm and the second bridge arm comprises an upper bridge arm and a lower bridge arm, a connection point between the upper bridge arm and the lower bridge arm of the first bridge arm is a midpoint of the first bridge arm, and a connection point between the upper bridge arm and the lower bridge arm of the second bridge arm is a midpoint of the second bridge arm;
the secondary-side circuit is connected between the transformer and an output of the power converter, the output of the power converter is configured to connect to a power grid or a load, and the power converter is configured to convert a direct current output by the photovoltaic module or the energy storage battery into an alternating current, and output the alternating current to the power grid or the load; and
the MPPT circuit is connected between the inputs of the power converter and the primary-side circuit, and the controller is configured to control the MPPT circuit to perform maximum power tracking on the photovoltaic module.

2. The power converter according to claim 1, wherein the MPPT circuit comprises a third bridge arm and a fourth bridge arm, wherein the third bridge arm is connected between the first negative input and the midpoint of the first bridge arm, the fourth bridge arm is connected between the second positive input and the midpoint of the second bridge arm, and each of the third bridge arm and the fourth bridge arm comprises two switching transistors having opposite freewheeling directions; and
when a difference between a first current and a second current is greater than a specified value, the controller is configured to control the third bridge arm and the fourth bridge arm to be in a working state, wherein the working state is a state in which at least one switching transistor in the bridge arm continuously switches between an on state and an off state, the first current is an output current of the photovoltaic module connected to the first positive input and the first negative input, and the second current is an output current of the another photovoltaic module connected to the second positive input and the second negative input.

3. The power converter according to claim 2, wherein when only the first current is detected, the controller is further configured to control the third bridge arm and the fourth bridge arm to be in the working state, and control a switching transistor of the lower bridge arm in the bridge arm of the primary-side circuit to be in the off state; or
when only the second current is detected, the controller is further configured to control the third bridge arm and the fourth bridge arm to be in the working state, and a switching transistor of the upper bridge arm in the bridge arm of the primary-side circuit to be in the off state.

4. The power converter according to claim 2 or 3, wherein the midpoint of the first bridge arm is connected to one end of a primary-side winding of the transformer, and the midpoint of the second bridge arm is connected to the other end of the primary-side winding of the transformer; and
the two switching transistors that are comprised in each of the third bridge arm and the fourth bridge arm are connected in series and have the opposite freewheeling directions.

5. The power converter according to claim 2 or 3, wherein each of the third bridge arm and the fourth bridge arm comprises two sub-bridge arms connected in parallel, each of the two sub-bridge arms connected in parallel comprises two switching transistors that are connected in series and have opposite freewheeling directions, and a connection point between the two switching transistors that are connected in series and have the opposite freewheeling directions is a midpoint of the corresponding sub-bridge arm;
the two sub-bridge arms of the third bridge arm are connected in parallel between the first negative input and one end of a primary-side winding of the transformer, a midpoint of one sub-bridge arm of the third bridge arm is connected to the upper bridge arm of the first bridge arm, and a midpoint of the other sub-bridge arm of the third bridge arm is connected to the lower bridge arm of the first bridge arm; and
the two sub-bridge arms of the fourth bridge arm are connected in parallel between the second positive input and the other end of the primary-side winding of the transformer, a midpoint of one sub-bridge arm of the fourth bridge arm is connected to the upper bridge arm of the second bridge arm, and a midpoint of the other sub-bridge arm of the fourth bridge arm is connected to the lower bridge arm of the second bridge arm.

6. The power converter according to any one of claims 1 to 5, wherein the power converter further comprises a first switching transistor, the first switching transistor is connected between the first negative input and the second positive input, and a freewheeling direction of the first switching transistor is from the first negative input to the second positive input.

7. The power converter according to claim 6, wherein
one end of the third bridge arm is connected to the first negative input, and one end of the fourth bridge arm is connected to the second positive input; or
both one end of the third bridge arm and one end of the fourth bridge arm are connected to the first negative input; or
both one end of the third bridge arm and one end of the fourth bridge arm are connected to the second positive input.

8. The power converter according to claim 6, wherein the power converter further comprises a second switching transistor, and the first switching transistor and the second switching transistor are connected in series between the first negative input and the second positive input; and
both one end of the third bridge arm and one end of the fourth bridge arm are connected to a connection point between the first switching transistor and the second switching transistor.

9. The power converter according to any one of claims 1 to 8, wherein the secondary-side circuit comprises a fifth bridge arm, the fifth bridge arm comprises an upper half-bridge arm and a lower half-bridge arm, the upper half-bridge arm of the fifth bridge arm comprises two switching transistors having opposite freewheeling directions, the lower half-bridge arm of the fifth bridge arm comprises two switching transistors having opposite freewheeling directions, and a connection point between the upper half-bridge arm of the fifth bridge arm and the lower half-bridge arm of the fifth bridge arm is connected to one end of a secondary-side winding of the transformer; and
the secondary-side circuit further comprises two capacitors, the two capacitors are connected in series and then connected in parallel to the fifth bridge arm, and a connection point between the two capacitors is connected to the other end of the secondary-side winding of the transformer.

10. The power converter according to any one of claims 1 to 8, wherein the secondary-side circuit comprises a fifth bridge arm and a sixth bridge arm that are connected in parallel, each of the fifth bridge arm and the sixth bridge arm comprises an upper half-bridge arm and a lower half-bridge arm, the upper half-bridge arm of each of the fifth bridge arm and the sixth bridge arm comprises two switching transistors having opposite freewheeling directions, and the lower half-bridge arm of each of the fifth bridge arm and the sixth bridge arm comprises two switching transistors having opposite freewheeling directions; and
a connection point between the upper half-bridge arm and the lower half-bridge arm of the fifth bridge arm is connected to one end of a secondary-side winding of the transformer, and a connection point between the upper half-bridge arm and the lower half-bridge arm of the sixth bridge arm is connected to the other end of the secondary-side winding of the transformer.

11. The power converter according to claim 4, wherein
when the first current is greater than the second current and the difference is greater than the specified value, the controller is configured to control the upper bridge arm of the first bridge arm and the upper bridge arm of the second bridge arm to be complementarily turned on; when controlling the switching transistor of the upper bridge arm of the first bridge arm to be in the on state, control the fourth bridge arm and the lower bridge arm of the second bridge arm to be complementarily turned on; and when controlling the switching transistor of the upper bridge arm of the second bridge arm to be in the on state, control the third bridge arm and the lower bridge arm of the first bridge arm to be complementarily turned on, wherein
the complementary turn-on means that when a switching transistor of one bridge arm is in the on state, a switching transistor of the other bridge arm is in the off state.

12. The power converter according to claim 4, wherein
when only the first current is detected, the controller is configured to control the switching transistor of the lower bridge arm of the first bridge arm and the switching transistor of the lower bridge arm of the second bridge arm to be in the off state, control the third bridge arm and the upper bridge arm of the first bridge arm to be complementarily turned on, and control the fourth bridge arm and the upper bridge arm of the second bridge arm to be complementarily turned on; or
when only the second current is detected, the controller is configured to control the switching transistor of the upper bridge arm of the first bridge arm and the switching transistor of the upper bridge arm of the second bridge arm to be in the off state, control the third bridge arm and the lower bridge arm of the first bridge arm to be complementarily turned on, and control the fourth bridge arm and the lower bridge arm of the second bridge arm to be complementarily turned on, wherein
the complementary turn-on means that when a switching transistor of one bridge arm is in the on state, a switching transistor of the other bridge arm is in the off state.

13. The power converter according to claim 5, wherein
when the difference between the first current and the second current is less than the specified value, the controller is further configured to control a switching transistor connected to the input of the power converter in the sub-bridge arm of the MPPT circuit to be in the off state; or
when the difference between the first current and the second current is greater than the specified value, the controller is further configured to control a switching transistor connected to the input of the power converter in the third bridge arm to be in the off state, and control a switching transistor connected to the input of the power converter in the fourth bridge arm to be in the off state.

14. The power converter according to claim 5, wherein
when only the first current is detected or only the second current is detected, the controller is further configured to control a switching transistor connected to the input of the power converter in the third bridge arm to be in the off state, and control a switching transistor connected to the input of the power converter in the fourth bridge arm to be in the off state.

15. The power converter according to claim 13, wherein
when the difference between the first current and the second current is less than the specified value, the controller is configured to control a switching transistor connected between the upper bridge arm of the first bridge arm and the primary-side winding in the third bridge arm and the lower bridge arm of the second bridge arm to be complementarily turned on, control a switching transistor connected between the lower bridge arm of the first bridge arm and the primary-side winding in the third bridge arm and the upper bridge arm of the second bridge arm to be complementarily turned on, control a switching transistor connected between the upper bridge arm of the second bridge arm and the primary-side winding in the fourth bridge arm and the lower bridge arm of the first bridge arm to be complementarily turned on, and control a switching transistor connected between the lower bridge arm of the second bridge arm and the primary-side winding in the fourth bridge arm and the upper bridge arm of the first bridge arm to be complementarily turned on, wherein
the complementary turn-on means that when a switching transistor of one bridge arm is in the on state, a switching transistor of the other bridge arm is in the off state.

16. The power converter according to claim 11 or 13, wherein on duration of the switching transistor of the bridge arm in the MPPT circuit is positively correlated with the difference between the first current and the second current.
